# EUROPEAN PATENT APPLICATION

(11) **EP 4 506 502 A1**
(43) Date of publication of application: **12.02.2025**
(21) Application number: 23831737.4
(22) Date of filing: 23.05.2023
(51) Int. Cl.: D06F 39/10, D06F 39/02, B01D 35/02, D06F 39/08, D06F 34/05, D06F 34/20, B01D 35/143, D06F 103/42, D06F 105/34

(54) **WASHING MACHINE AND CONTROLLING METHOD OF WASHING MACHINE**

(30) Priority: 28.06.2022 KR 20220079294; 27.07.2022 KR 20220093492; 11.10.2022 KR 20220130086
(71) Applicant: Samsung Electronics Co., Ltd., Suwon-si, Gyeonggi-do 16677 (KR)
(72) Inventor: PARK, Jaeryong, Suwon-si, Gyeonggi-do 16677 (KR); SEO, Dongpil, Suwon-si, Gyeonggi-do 16677 (KR); LEE, Kanghyun, Suwon-si, Gyeonggi-do 16677 (KR); CHO, Youngjin, Suwon-si, Gyeonggi-do 16677 (KR)
(74) Representative: Gulde & Partner
(86) International application number: PCT/KR2023/007017
(87) International publication number: WO 2024/005373

(57) **Abstract**

Provided is a washing machine comprising: a housing having a forwardly open inlet; a tub disposed inside the housing; a door provided to open and close the inlet; a detergent supply device provided in a first space formed between the housing and the upper part of a first side of the tub to supply detergent to the tub; a pump device provided to pump washing water inside the tub; and a filter provided to filter the washing water flowing in from the pump device.

## Description

### [Technical Field]

The present disclosure relates to a washing machine having a filter and a control method of the washing machine.

### [Background Art]

A washing machine is a home appliance that washes clothes, towels, bedding, etc. Washing machines are classified into drum-type washing machines that wash laundry by rotating the drum to repeatedly raise and drop the laundry, and electric washing machines that wash laundry by using water streams generated by a pulsator when the drum rotates.

The washing machine circulates washing water in the tub during a process of supplying the washing water to the tub and washing or rinsing laundry. The washing machine drains washing water in the tub to the outside during a process of discharging the washing water from the tub and removing water from laundry.

### [Disclosure]

### [Technical Problem]

An aspect of the disclosure provides a washing machine having a filter for filtering washing water.

An aspect of the disclosure provides a washing machine capable of circulating or draining filtered washing water.

An aspect of the disclosure provides a washing machine capable of ensuring easy maintenance of a filter.

An aspect of the disclosure provides a washing machine capable of ensuring a compact arrangement of a filter.

Technical problems to be achieved by the present specification are not limited to the above-mentioned technical problems, and other technical problems not mentioned will be clearly understood by those skilled in the art to which the disclosure belongs from the following description.

### [Technical Solution]

A washing machine according to a concept of the disclosure may include a housing including a loading inlet open along a front direction, a tub to be positioned inside the housing, a door configured to open or close the loading inlet, a detergent supply device to be provided in a first space formed between the housing and an upper portion of a first side of the tub, the detergent supply device configured to supply a detergent to the tub, and a pump device configured to pump washing water inside the tub. The washing machine may include a filter configured to filter washing water received from the pump device. The washing machine may include a filter discharge pipe through which washing water having passed through the filter flows. The filter discharge pipe may be configured to guide washing water to the tub or outside of the housing. The filter may be provided in a second space formed between the housing and an upper portion of a second side of the tub.

The housing may be in a shape of a box. The tub may be in a shape of a cylinder. The second space may be formed between an inner side of the housing and an outer side of a portion of the tub, the portion positioned in a right side from a vertical line passing a center of the loading inlet and in an upper side from a horizontal line passing the center of the loading inlet.

The filter may be inserted into the second space or taken out of the second space.

The washing machine may further include a case configured to accommodate the filter. The case may include an inlet to be connected to the pump device, wherein washing water flows toward the filter through the inlet, and an outlet configured to discharge washing water passed through the filter to the filter discharge pipe.

The filter discharge pipe may include a circulation pipe extending from the outlet to the tub, and a drain pipe extending from the outlet to the outside of the housing.

The washing machine may further include a flow path switching device configured to enable washing water passed through the filter to flow into the circulation pipe or enable washing water passed through the filter to flow into the drain pipe.

The outlet may include a first outlet port connected to the circulation pipe, and a second outlet port connected to the drain pipe and positioned at an upper location than the first outlet port.

The flow path switching device may further include a valve configured to open or close the circulation pipe.

The filter may include a first filter port configured to discharge filtered washing water to the first outlet port, and a second filter port configured to discharge filtered washing water to the second outlet port. The flow path switching device may further include a valve configured to open or close the first filter port.

The washing machine may further include a controller configured to control the valve. The controller may be configured to close the valve during a drain operation and open the valve based on termination of the drain operation.

The flow path switching device may further include a first valve configured to open or close the circulation pipe, and a second valve configured to open or close the drain pipe. The washing machine may further include a controller configured to control the first valve and the second valve, the controller closes the first valve and opens the second valve during a drain operation.

The filter may form a collecting space therein. The collecting space may collect foreign materials contained in the washing water as the washing water received from the pump device flows from inside of the filter to outside of the filter.

The filter may include a first filter portion configured to filter washing water received through the inlet, and a second filter portion positioned in front of the first filter portion and configured to be inserted into the case or taken out of the case. The washing machine may further include a blade configured to be rotatable to transfer foreign materials collected in the first filter portion to the second filter portion.

The washing machine may further include a user interface, a motor configured to rotate the blade, and a controller. The controller may be configured to supply driving current to the motor based on an operation of at least one pump included in the pump device, detect clogging of the filter based on a load of the motor, and control the user interface to provide a feedback for notifying clogging of the filter in response to the detection of the clogging of the filter.

The washing machine may further include a motor configured to rotate the blade, and a controller. The controller may be configured to supply driving current to the motor based on an operation of at least one pump included in the pump device, detect clogging of the filter based on a load of the motor, and stop operating the motor in response to the detection of the clogging of the filter.

A control method of a washing machine according to a concept of the disclosure, the washing machine including a pump device including a first pump and a second pump configured to pump washing water inside the tub, a filter configured to filter washing water received from the pump device, and a circulation pipe configured to guide washing water passed through the filter to the tub, may include closing the circulation pipe based on an operation of the first pump, and opening the circulation pipe based on the first pump not operating or the second pump operating.

The control method of the washing machine may include operating the first pump during a drain operation and operating the second pump during a washing operation or a rinsing operation.

The control method of the washing machine may further include a blade configured to be rotatable while being in contact with an inner surface of the filter and transfer foreign materials collected in the filter body to one side of inside of the filter body through the rotation, and the control method of the washing machine may further include rotating the blade based on an operation of the first pump or the second pump.

The control method of the washing machine may further include detecting clogging of the filter based on a load of a motor configured to rotate the blade, and providing a feedback for notifying the clogging of the filter in response to the detection of the clogging of the filter.

The control method of the washing machine may further include detecting clogging of the filter based on a load of the motor configured to rotate the blade, and stopping the blade based on the detection of the clogging of the filter.

### [Advantageous Effects]

According to a concept of the disclosure, a washing machine may effectively collect foreign materials contained in washing water.

According to a concept of the disclosure, a washing machine may circulate or drain washing water passed through a filter.

According to a concept of the disclosure, a filter may be positioned compactly.

According to a concept of the disclosure, a filter may be easily maintained.

Effects that may be achieved by the disclosure are not limited to the above-mentioned effects, and other effects not mentioned will be clearly understood by one of ordinary skill in the technical field to which the disclosure belongs from the following descriptions.

### [Description of Drawings]

FIG. 1 is a perspective view of an example of a washing machine according to an embodiment.
FIG. 2 is a perspective view of an example of a washing machine according to an embodiment.
FIG. 3 is a perspective view of an example of a washing machine according to an embodiment.
FIG. 4 is a perspective view of an example of a washing machine according to an embodiment.
FIG. 5 is a front view of an example of a washing machine according to an embodiment.
FIG. 6 is a cross-sectional view of an example of a washing machine according to an embodiment.
FIG. 7 shows an example of a filter device according to an embodiment.
FIG. 8 shows an example of a filter device according to an embodiment.
FIG. 9 shows an example of a filter device according to an embodiment.
FIG. 10 shows a cross section of an example of a filter device according to an embodiment.
FIG. 11 shows a cross section of an example of a filter device according to an embodiment.
FIG. 12 shows a cross section of an example of a filter device according to an embodiment.
FIG. 13 shows a cross section of an example of a filter device according to an embodiment.
FIG. 14 shows a cross section of an example of a filter device according to an embodiment.
FIG. 15 shows a cross section of an example of a filter device according to an embodiment.
FIG. 16 shows a cross section of an example of a filter device according to an embodiment.
FIG. 17 shows a cross section of an example of a filter device according to an embodiment.
FIG. 18 shows a cross section of an example of a filter device according to an embodiment.
FIG. 19 shows a cross section of an example of a filter device according to an embodiment.
FIG. 20 shows an example of a filter device according to an embodiment.
FIG. 21 shows a state in which a filter of the filter device shown in FIG. 20 is taken out.
FIG. 22 is a perspective view of an example of a filter device according to an embodiment.
FIG. 23 is a perspective view of an example of a filter device according to an embodiment.
FIG. 24 is a perspective view of an example of a filter device according to an embodiment.
FIG. 25 is a perspective view of an example of a filter device according to an embodiment.
FIG. 26 is an exploded view of a filter, a case, and a motor in an example of a filter device according to an embodiment.
FIG. 27 is an exploded view of the filter and the motor shown in FIG. 26.
FIG. 28 is a cross-sectional view of the filter device shown in FIG. 26.
FIG. 29 is a cross-sectional view of an opposite side of the filter device shown in FIG. 26.
FIG. 30 shows a state in which dirt is collected inside the filter device shown in FIG. 26.
FIG. 31 shows a state in which dirt inside the filter device shown in FIG. 30 is emptied.
FIG. 32 is a perspective view of an example of a flow path switching device.
FIG. 33 is an exploded view of an example of a flow path switching device.
FIG. 34 is a control block diagram of a washing machine according to an embodiment.
FIG. 35 shows an example of a washing cycle according to an embodiment.
FIG. 36 shows an example of a control block diagram of a washing machine according to an embodiment and flows of signals.
FIG. 37 shows an example of a control block diagram of a washing machine according to an embodiment and flows of signals.
FIG. 38 is a flowchart illustrating a control method of a washing machine according to an embodiment when a driving condition of a circulation pump is satisfied.
FIG. 39 shows an example of a control block diagram of a washing machine according to an embodiment and flows of signals.
FIG. 40 shows an example of a control block diagram of a washing machine according to an embodiment and flows of signals.
FIG. 41 is a flowchart illustrating a control method of a washing machine according to an embodiment when a driving condition of a drain pump is satisfied.
FIG. 42 shows an example of a control block diagram of a washing machine according to an embodiment and flows of signals.
FIG. 43 shows an example of a control block diagram of a washing machine according to an embodiment and flows of signals.
FIG. 44 is a flowchart illustrating a control method of a washing machine according to an embodiment when a driving condition of a circulation pump or a drain pump is satisfied.
FIG. 45 shows an example of a control block diagram of a washing machine according to an embodiment and flows of signals.
FIG. 46 is a flowchart illustrating a control method of a washing machine according to an embodiment when clogging of a filter is detected.

### [Modes of the Invention]

Various embodiments of the present document and terms used therein are not intended to limit the technical features described in this document to specific embodiments, and should be understood to include various modifications, equivalents, or substitutes of the corresponding embodiments.

In connection with the description of the drawings, similar reference numerals may be used for similar or related components.

The singular form of a noun corresponding to an item may include one or a plurality of the items unless clearly indicated otherwise in a related context.

In this document, phrases, such as "A or B", "at least one of A and B", "at least one of A or B," "A, B or C," "at least one of A, B and C," and "at least one of A, B, or C", may include any one or all possible combinations of items listed together in the corresponding phrase among the phrases.

The term "and/or" includes any and all combinations of one or more of associated listed items.

Terms such as "first", "second", or "1^{st}" or "2^{nd}" may be used simply to distinguish a component from other components, without limiting the component in other aspects (e.g., importance or order).

A certain (e.g., a first) component is referred to as "coupled" or "connected" with or without the terms "functionally" or "communicatively" to another (e.g., second) component. When mentioned, it means that any of the above components can be connected to the other components directly (e.g., by wire), wirelessly, or via a third component.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

It will be understood that when a certain component is referred to as being "connected to", "coupled to", "supported by" or "in contact with" another component, it can be directly or indirectly connected to, coupled to, supported by, or in contact with the other component. When a component is indirectly connected to, coupled to, supported by, or in contact with another component, it may be connected to, coupled to, supported by, or in contact with the other component through a third component.

It will also be understood that when a component is referred to as being "on" or "over" another component, it can be directly on the other component or intervening components may also be present.

A washing machine according to various embodiments may be an example of a clothes processing apparatus.

A washing machine according to various embodiments may include a top-loading washing machine in which a loading inlet for allowing a user to put laundry in or take laundry out faces upward, or a front-loading washing machine in which a loading inlet for allowing a user to put laundry in or take laundry out faces forward. The washing machine according to various embodiments may include another type of washing machine, other than the top-loading washing machine and the front-loading washing machine.

The top-loading washing machine may wash laundry by using a water stream generated by a rotating body such as a pulsator. The front-loading washing machine may wash laundry by rotating a drum to repeatedly lift and drop the laundry. The front-loading washing machine may include a lifter for lifting laundry. The washing machine according to various embodiments may include a washing machine using another washing method other than the above-described washing methods.

Meanwhile, in the following description, the terms "front-rear direction", "front direction", "rear direction", "left-right direction", "left", "right", "up-down direction", "upper", "lower", etc. are defined based on the drawings, and the shapes and positions of the corresponding components are not limited by the terms. For example, a +X direction may be defined as a front direction and a -X direction may be defined as a rear direction. For example, a +Y direction may be defined as a right direction, and a -Y direction may be defined as a left direction. For example, a +Z direction may be defined as an upper direction, and a -Z direction may be defined as a lower direction.

Hereinafter, an embodiment of the disclosure will be described in detail with reference to the accompanying drawings.

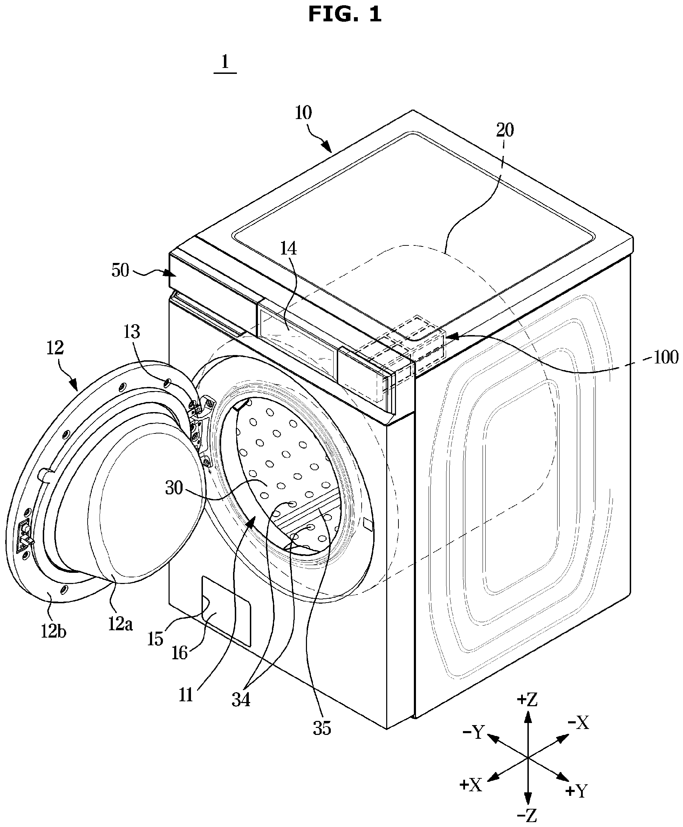

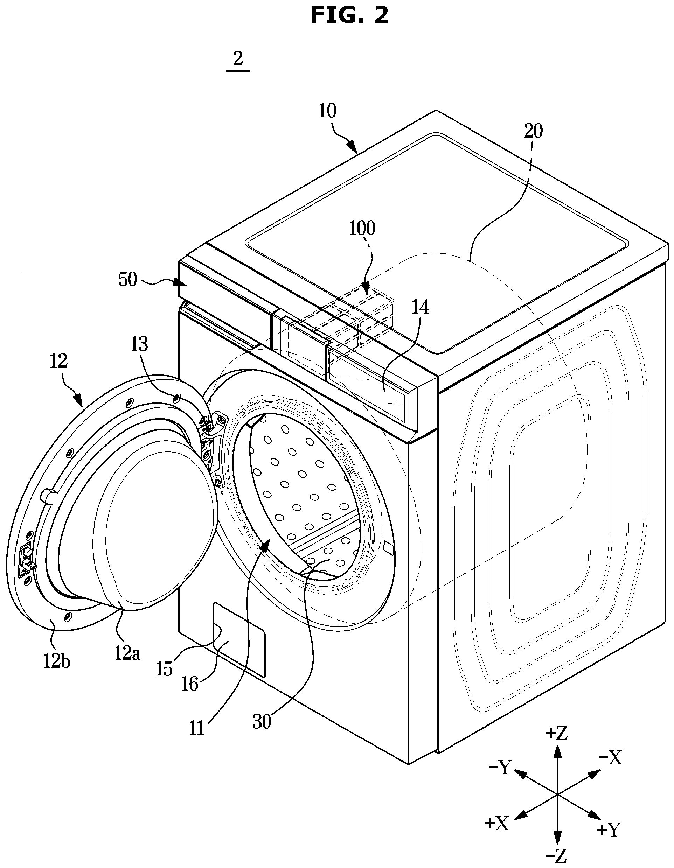

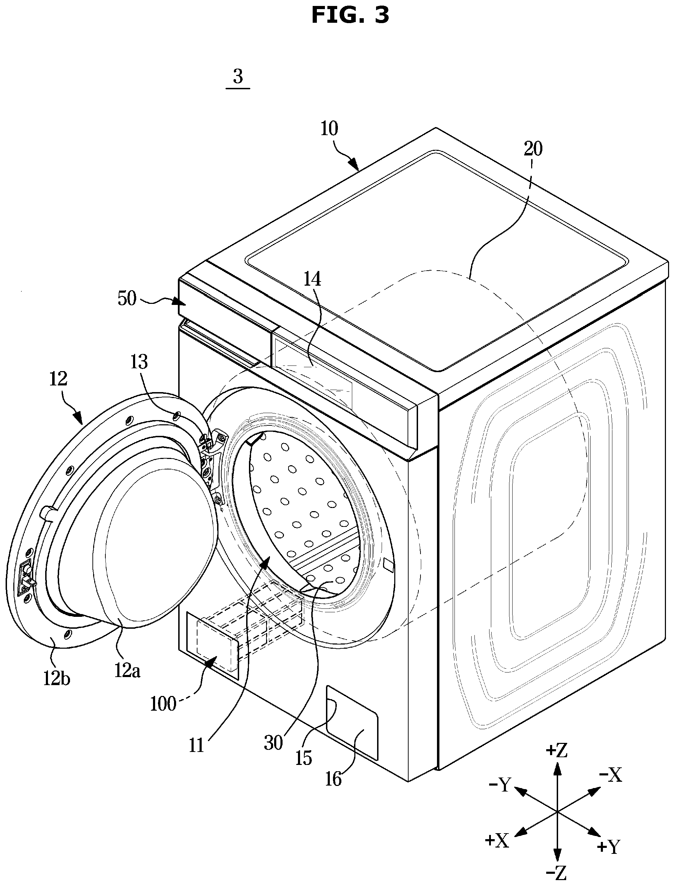

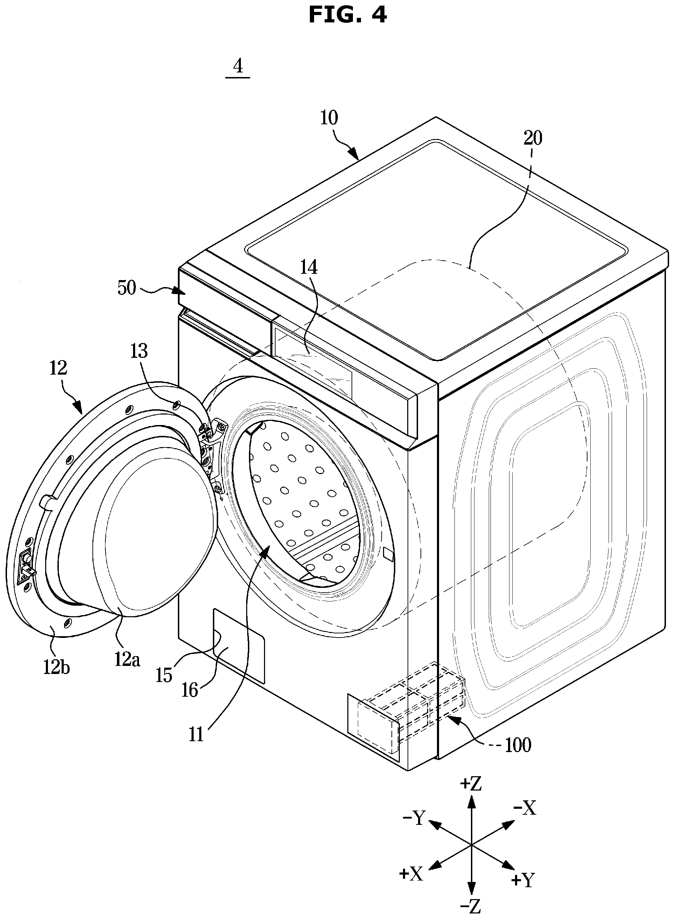

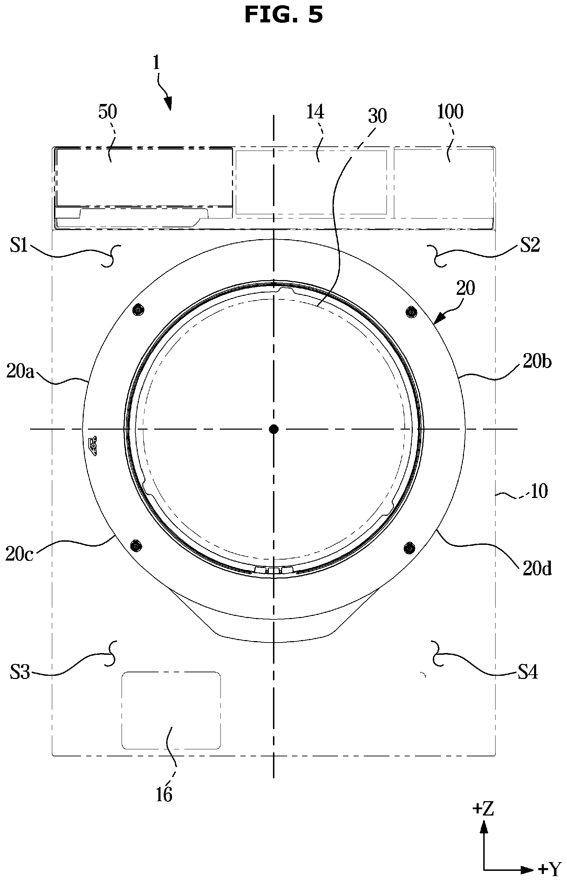

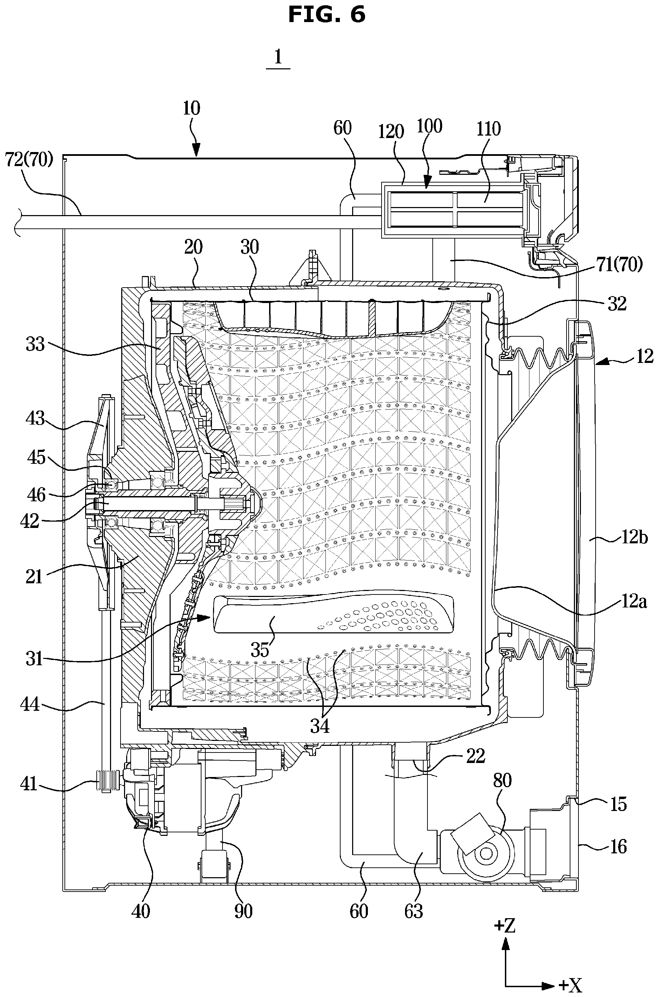

FIG. 1 is a perspective view of an example of a washing machine according to an embodiment. FIG. 2 is a perspective view of an example of a washing machine according to an embodiment. FIG. 3 is a perspective view of an example of a washing machine according to an embodiment. FIG. 4 is a perspective view of an example of a washing machine according to an embodiment. FIG. 5 is a front view of an example of a washing machine according to an embodiment. FIG. 6 is a cross-sectional view of an example of a washing machine according to an embodiment.

Referring to FIGS. 1 to 6, a washing machine may include a housing 10. The washing machine 1 may include a tub 20 positioned inside the housing 10. The washing machine 1 may include a drum 30 positioned inside the tub 20. The washing machine 1 may include a driving motor 40 for driving the drum 30.

The housing 10 may form an appearance of the washing machine 1. The housing 10 may accommodate components of the washing machine 1. For example, the housing 10 may include substantially a box shape.

The washing machine 1 may include a loading inlet 11. The housing 10 may include the loading inlet 11. The loading inlet 11 may allow laundry (for example, clothes, etc.) to be put in the drum 30 or taken out of the drum 30. The loading inlet 11 may be formed in a front side of the housing 10. The loading inlet 11 may open toward a front direction, although not limited thereto. However, according to the washing machine 1 being a top loading type washing machine, the loading inlet 11 may be formed in an upper side of the housing 10. In this case, the loading inlet 11 may open toward an upper direction of the housing 10. A shape and/or position of the loading inlet 11 may depend on a type of a washing machine.

The washing machine 1 may include a door 12. The door 12 may open or close the loading inlet 11. The door 12 may be rotatably installed on the housing 10. For example, the door 12 may rotate by a hinge 13.

For example, the door 12 may include a door glass 12a to allow a user to view the inside of the drum 30. For example, the door glass 12a may include a transparent tempered glass material. For example, the door 12 may include a door frame 12b supporting the door glass 12a.

The tub 20 may be positioned inside the housing 10. The tub 20 may accommodate washing water. The tub 20 may store washing water. In a front side of the tub 20, an opening through which laundry is put in the tub 20 may be formed. The opening of the tub 20 may correspond to the loading inlet 11. For example, the tub 20 may have a substantially cylindrical shape.

The washing machine 1 may include a damper 90. The tub 20 may be supported on the housing 10 by the damper 90. For example, the damper 90 may connect an outer surface of the tub 20 to an inner lower surface of the housing 10. Vibration generated in the tub 20 may be reduced by the damper 90. Noise generated in the tub 20 may be reduced by the damper 90. A shock occurred in the tub 20 may be relieved by the damper 90.

The washing machine 1 may include a detergent supply device 50. The detergent supply device 50 may supply a detergent to the tub 20. The detergent supply device 50 may accommodate a detergent. The detergent supply device 50 may accommodate a first detergent (for example, a main detergent, etc.) that is to be provided to the tub 20 during a washing operation. The detergent supply device 50 may accommodate a second detergent (for example, a pre-wash detergent, fabric softener, or bleach, etc.) that is to be provided to the tub 20 during a rinsing operation. A kind of a detergent accommodated in the detergent supply device 50 is not limited as long as the detergent is used to wash laundry.

Water supplied from an external water supply source (not shown) may be supplied to inside of the tub 20 together with a detergent via the detergent supply device 50.

The drum 30 may be positioned inside the tub 20. The drum 30 may be rotatably provided inside the tub 20. The drum 30 may rotate on a rotating shaft. For example, the drum 30 may have a substantially cylindrical shape.

The drum 30 may accommodate laundry put therein through the loading inlet 11. The drum 30 may wash the laundry while rotating.

The drum 30 may include a cylindrical portion 31. The drum 30 may include a front plate 32 positioned in a front part of the cylindrical portion 31. The drum 30 may include a rear plate 33 positioned in a rear part of the cylindrical portion 31. An opening through which laundry is put may be formed in the front plate 32. The opening of the drum 30 may correspond to the loading inlet 11. A shaft 42 for transferring power of the driving motor 40 may be connected to the rear plate 33.

The drum 30 may include a through hole 34. The through hole 34 may pass washing water through. The through hole 34 may be formed along a circumference of the drum 30. For example, a plurality of through holes 34 may be provided.

The drum 30 may include a lifter 35. The lifter 35 may raise and drop laundry while the drum 30 rotates. The lifter 35 may be formed on an inner circumferential surface of the drum 30. For example, a plurality of lifters 35 may be provided.

The drum 30 may be connected to the driving motor 40 through the shaft 42. According to connection types of the shaft 42 and the driving motor 40, there may be a direct driving type in which the shaft 42 is directly connected to the driving motor 40 to rotate the drum 30, and an indirect driving type in which a shaft pulley 43 is connected between the driving motor 40 and the shaft 42 to drive the drum 30.

The washing machine 1 according to an example of the disclosure may be an indirect driving type, although not limited thereto. However, technical features of the disclosure may also be applicable to a direct driving type.

One end of the shaft 43 may be connected to the rear plate 33 of the drum 30, and another end of the shaft 43 may extend to an outer side of a rear portion 22 of the tub 20. The other end of the shaft 43 may be inserted in the shaft pulley 43 to obtain a driving force from the driving motor 40. Also, a motor pulley 41 may be formed at a rotating shaft of the driving motor 40. A driving belt 44 may be provided between the motor pulley 41 and the shaft pulley 43. The shaft 42 may be driven by the driving belt 44. The driving belt 44 may rotate in a clockwise or counterclockwise direction to drive the shaft 42.

In the rear portion 22 of the tub 20, a bearing housing 45 may be installed to rotatably support the shaft 42. The bearing housing 45 may be formed of an aluminum alloy. The bearing housing 45 may be inserted into the rear portion 22 of the tub 20 upon injection-molding of the tub 20. A plurality of bearings 46 may be provided between the bearing housing 45 and the shaft 42 to smoothly rotate the shaft 42.

The washing machine 1 may include a control panel 14. The control panel 14 may be provided at a front upper portion of the housing 10. The control panel 14 may be provided as an example of a user interface 310. For example, the control panel 14 may include a display 14b for displaying a state of the washing machine 1. For example, the control panel 14 may include an input device 14a for receiving a user's command. For example, the control panel 14 may include a printed circuit board assembly (not shown).

The washing machine 1 may include a filter device 100. The filter device 100 may filter washing water. Herein, washing water may be general term for water flowing inside the housing 10.

The filter device 100 may include a filter 110 for collecting foreign materials contained in washing water. For example, the filter 110 may collect microplastics contained in washing water. Because the washing machine 1 includes the filter device 100, foreign materials (for example, microplastics, etc.) contained in washing water may be prevented from being discharged to outside of the housing 10.

The filter device 100 may include a case 120 that accommodates the filter 110. The case 120 may be provided inside the housing 10.

The filter device 100 may receive washing water from a pump device 80 which will be described below. The filter device 100 may filter washing water received from the pump device 80.

The washing machine 1 may include the pump device 80. The pump device 80 may pump washing water in the tub 20. The pump device 80 may transfer washing water in the tub 20 to the filter device 100. The pump device 80 may move washing water in the tub 20 to the filter device 100. For example, the pump device 80 may be provided below the tub 20.

The pump device 80 may be connected to an outlet 22 of the tub 20 such that washing water in the tub 20 flows into the pump device 80. The outlet 22 may be formed in a lower portion of the tub 20. The pump device 80 may be connected to the tub 20 through a tub discharge pipe 63.

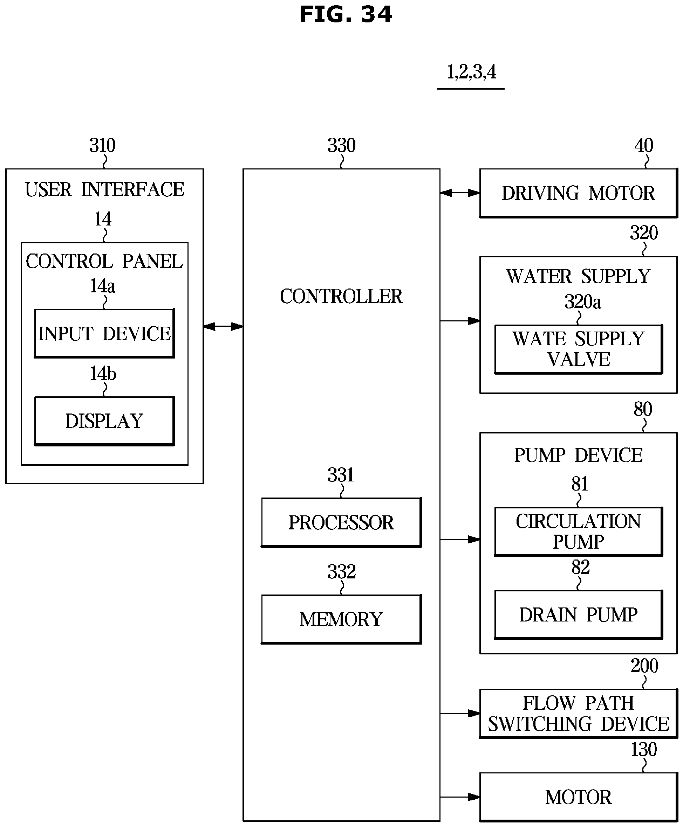

For example, the pump device 80 may include a circulation pump 81 (see FIG. 34). The circulation pump 81 may generate a pumping force for circulating washing water in the tub 20. The circulation pump 81 is also referred to as a first pump 81.

For example, the pump device 80 may include a drain pump 82 (see FIG. 34). The drain pump 82 may generate a pumping force for draining washing water in the tub 20. The drain pump 82 is also referred to as a second pump 82.

However, it is not limited to this, and for example, the pump device 80 may include a single pump. For example, the pump device 80 may include three or more pumps. The number of pumps of the pump device 80 is not limited as long as the pump device 80 moves washing water in the tub 20 to the filter device 100.

The washing machine 1 may include a pump opening 15 formed in the housing 10 to correspond to the pump device 80. The pump opening 15 may allow an access to the pump device 80. For example, the pump opening 15 may open toward a front direction of the housing 10. For example, the pump opening 15 may be formed in the front side of the housing 10.

The washing machine 1 may include a pump cover 16 that covers the pump device 80. The pump cover 16 may open or close the pump opening 15. The pump cover 16 may be detachably installed in the pump opening 15. For example, the pump cover 16 may be rotatable with respect to the housing 10. For example, the pump cover 16 may be rotatable with respect to the pump opening 15.

Meanwhile, referring to FIGS. 1 to 5, the detergent supply device 50 may be accommodated in the housing 10. The detergent supply device 50 may be provided in a space formed between the housing 10 and the tub 20. The filter device 100 may be accommodated inside the housing 10. The filter device 100 may be provided in the space formed between the housing 10 and the tub 20. The filter device 100 may not interfere with the detergent supply device 50.

For example, a position of the filter device 100 will be described with reference to FIG. 1.

The detergent supply device 50 may be provided in a first space S1 formed between the housing 10 and an upper portion of a first side of the tub 20. For example, the first side of the tub 20 may be a left side of the tub 20.

The filter device 100 may be provided in a second space S2 formed between the housing 10 and an upper portion of a second side of the tub 20. For example, the second side of the tub 20 may be a right side of the tub 20.

For example, referring to FIG. 5, a portion of the tub 20, positioned in a left side from a vertical line V passing a center of the loading inlet 11 and in an upper side from a horizontal line H passing the center of the loading inlet 11, is referred to as a first portion 20a. For example, the first portion 20a may have a shape corresponding to about 1/4 of the cylinder. The first space S1 may be defined as a space formed between an inner side of the housing 10 and an outer side of the first portion 20a of the tub 20.

For example, referring to FIG. 5, a portion of the tub 20, positioned in a right side from the vertical line V passing the center of the loading inlet 11 and in the upper side from the horizontal line H passing the center of the loading inlet 11, is referred to as a second portion 20b. For example, the second portion 20b may have a shape corresponding to about 1/4 of the cylinder. The second space S2 may be defined as a space formed between the inner side of the housing 10 and an outer side of the second portion 20b of the tub 20.

For example, referring to FIG. 5, a portion of the tub 20, positioned in the left side from the vertical line V passing the center of the loading inlet 11 and in a lower side from the horizontal line H passing the center of the loading inlet 11, is referred to as a third portion 20c. For example, the third portion 20c may have a shape corresponding to about 1/4 of the cylinder. The third space S3 may be defined as a space formed between the inner side of the housing 10 and an outer side of the third portion 20c of the tub 20.

For example, referring to FIG. 5, a portion of the tub 20, positioned in the right side from the vertical line V passing the center of the loading inlet 11 and in the lower side from the horizontal line H passing the center of the loading inlet 11, is referred to as a fourth portion 20d. For example, the fourth portion 20d may have a shape corresponding to about 1/4 of the cylinder. The fourth space S4 may be defined as a space formed between the inner side of the housing 10 and an outer side of the fourth portion 20d of the tub 20.

The detergent supply device 50 and the filter device 100 may be spaced from each other in a left-right direction (Y direction). The control panel 14 may be positioned between the detergent supply device 50 and the filter device 100. The detergent supply device 50 and the filter device 100 may be substantially symmetrical to each other with respect to the vertical line V.

The filter device 100 may not interfere with the tub 20 inside the housing 10. The filter device 100 may not interfere with the detergent supply device 50 inside the housing 10. For example, in the case in which the detergent supply device 50 is positioned in the first space S1, the filter device 100 may be positioned in the second space S2 other than the first space S1. The filter device 100 may be positioned in a remaining space inside the housing 10. The filter device 100 may be efficiently positioned in a limited space inside the housing 10. It may be unnecessary to secure a separate space to locate the filter device 100 inside the housing 10. The filter device 100 may be positioned compactly in an area where the other components of the washing machine 1 are not positioned. As a result, space utilization of the washing machine 1 may increase.

However, the detergent supply device 50 may be provided in the second space S2 and the filter device 100 may be provided in the first space S1, which is not shown in FIG. 1.

For example, a position of the filter device 100 will be described with reference to FIG. 2.

A washing machine 2 may include the housing 10, the tub 20, and the filter device 100. The washing machine 2 may include the detergent supply device 50. The washing machine 2 may be different from the washing machine 1 in view of the position of the filter device 100. Like reference numerals may represent members or components that perform the substantially same functions, and overlapping descriptions may be omitted.

The detergent supply device 50 may be provided in the first space S1. However, unlike FIG. 2, the detergent supply device 50 may be provided in the second space S2. Or, the detergent supply device 50 may be provided between the housing 10 and an upper center portion of the tub 20.

The filter device 100 may be adjacent to the detergent supply device 50. The filter device 100 may be positioned to one side of the detergent supply device 50. The filter device 100 may be positioned to a right side of the detergent supply device 50. For example, the filter device 100 may be positioned between the detergent supply device 50 and the control panel 14, although not limited thereto.

However, unlike FIG. 2, the filter device 100 may be positioned to a left side of the detergent supply device 50.

For example, a position of the filter device 100 will be described with reference to FIG. 3.

A washing machine 3 may include the housing 10, the tub 20, and the filter device 100. The washing machine 3 may include the detergent supply device 50. The washing machine 3 may be different from the washing machine 1 in view of the position of the filter device 100. Like reference numerals may represent members or components that perform the substantially same functions, and overlapping descriptions may be omitted.

The detergent supply device 50 may be provided in the first space S1. Unlike FIG. 3, the detergent supply device 50 may be provided in the second space S2. Or, the detergent supply device 50 may be provided between the housing 10 and the upper center portion of the tub 20.

The filter device 100 may be provided in the third space S3. The pump device 80 covered by the pump cover 16 may be provided in the fourth space S4. The filter device 100 may be spaced from the pump device 80 in the left-right direction (Y direction), although not limited thereto.

However, unlike FIG. 3, the positions of the detergent supply device 50 and the pump device 80 may be reversed. In this case, the filter device 100 may be spaced from the detergent supply device 50 in the left-right direction (Y direction).

For example, a position of the filter device 100 will be described with reference to FIG. 4.

A washing machine 4 may include the housing 10, the tub 20, and the filter device 100. The washing machine 4 may include the detergent supply device 50. The washing machine 4 may be different from the washing machine 1 in view of the position of the filter device 100. Like reference numerals may represent members or components that perform the substantially same functions, and overlapping descriptions may be omitted.

The detergent supply device 50 may be provided in the first space S1. However, unlike FIG. 4, the detergent supply device 50 may be provided in the second space S2. Or, the detergent supply device 50 may be provided between the housing 10 and the upper center portion of the tub 20.

The filter device 100 may be provided in the fourth space S4. The pump device 80 covered by the pump cover 16 may be provided in the third space S3. The filter device 100 may be spaced from the pump device 80 in the left-right direction (Y direction), although not limited thereto.

However, unlike FIG. 4, the positions of the detergent supply device 50 and the pump device 80 may be reversed. In this case, the filter device 100 may be spaced from the detergent supply device 50 in the left-right direction (Y direction).

Meanwhile, the position of the filter device 100 is not limited to the above-described examples. The filter device 100 may be provided at various positions as long as the filter device 100 does not interfere with the tub 20 and the other components of the washing machine 1 inside the housing 10.

For example, a pipe of the washing machine 1 will be described with reference to FIG. 6. The pipe shown in FIG. 6 may also be applied to the washing machines 2, 3, and 4.

The washing machine 1 may include the tub discharge pipe 63. The tub discharge pipe 63 may be provided between the outlet 22 of the tub 20 and the pump device 80. The tub discharge pipe 63 may connect the outlet 22 of the tub 20 to the pump device 80. The tub discharge pipe 63 may guide washing water discharged from the tub 20 to the pump device 80. The tub discharge pipe 63 is also referred to as a tub discharge flow path 63.

The washing machine 1 may include a connection pipe 60. The connection pipe 60 may be provided between the pump device 80 and the filter device 100. The connection pipe 60 may connect the pump device 80 to the filter device 100. The connection pipe 60 may extend from the pump device 80 to the filter device 100. The connection pump 81 may guide washing water pumped by the pump device 80 to the filter device 100. The connection pipe 60 may move washing water pumped by the pump device 80 to the filter device 100. The connection pipe 60 is also referred to as a connection flow path 60.

Meanwhile, in FIG. 6, the connection pipe 60 is shown to be provided as a single component, although not limited thereto. However, at least one or more connection pipes 60 may be provided. For example, the number of the connection pipes 60 may correspond to the number of pumps of the pump device 80.

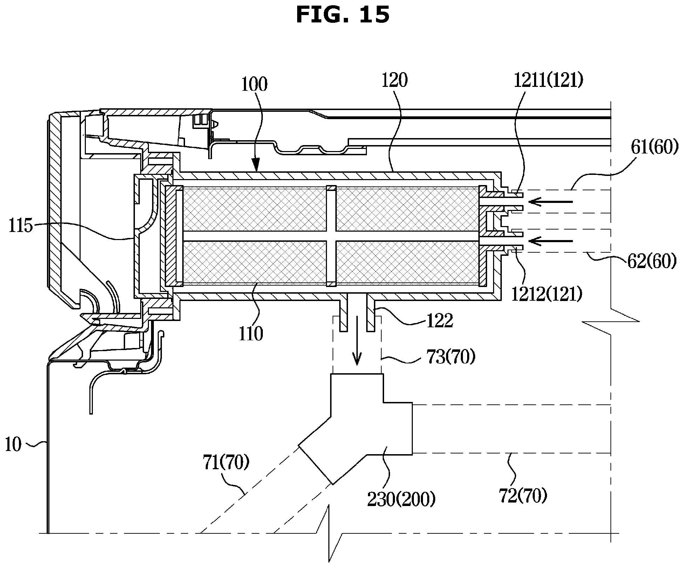

For example, the connection pipe 60 may include a first connection pipe 61 (see FIGS. 15 to 19). The first connection pipe 61 may connect the circulation pump 81 to the filter device 100. The first connection pipe 61 may extend from the circulation pump 81 toward the filter device 100. The first connection pipe 61 may guide washing water pumped by the circulation pump 81 to the filter device 100. Washing water pumped by the circulation pump 81 may flow into the filter device 100 through the first connection pipe 61. The first connection pipe 61 is also referred to as a circulation connection pipe 61. The first connection pipe 61 is also referred to as a circulation connection flow path 61.

For example, the connection pipe 61 may include a second connection pipe 62 (see FIGS. 15 to 19). The second connection pipe 62 may connect the drain pump 82 to the filter device 100. The second connection pipe 62 may extend from the drain pump 82 toward the filter device 100. The second connection pipe 62 may guide washing water pumped by the drain pump 82 to the filter device 100. Washing water pumped by the drain pump 82 may flow into the filter device 100 through the second connection pipe 62. The second connection pipe 62 is also referred to as a drain connection pipe 62. The second connection pipe 62 is also referred to as a drain connection flow path 62.

For example, the first connection pipe 61 and the second connection pipe 62 may extend from the pump device 80 and be joined before being connected to the filter device 100.

The washing machine 1 may include a filter discharge pipe 70. Washing water discharged from the filter device 100 may flow through the filter discharge pipe 70. Washing water passed through the filter 110 may flow the filter discharge pipe 70. Filtered washing water may flow through the filter discharge pipe 70. Washing water from which foreign materials have been removed may flow through the filter discharge pipe 70. The filter discharge pipe 70 is also referred to as a filter discharge flow path 70.

The filter discharge pipe 70 may guide washing water to the outside of the tub 20 or the housing 10. The filter discharge pipe 70 may circulate washing water into the tub 20 or drain washing water to the outside of the housing 10.

For example, the filter discharge pipe 70 may include a circulation pipe 71. The circulation pipe 71 may connect the filter device 100 to the tub 20. The circulation pipe 71 may communicate with the tub 20. The circulation pipe 71 may guide washing water passed through the filter 110 to the tub 20. The circulation pipe 71 may transfer washing water passed through the filter 110 to the tub 20. The circulation pipe 71 may circulate washing water passed through the filter 110 to the tub 20. The circulation pipe 71 may extend from the filter device 100 toward the tub 20. The circulation pipe 71 is also referred to as a circulation flow path 71.

For example, the filter discharge pipe 70 may include a drain pipe 72. The drain pipe 72 may connect the filter device 100 to the outside of the housing 10. The drain pipe 72 may communicate with the outside of the housing 10. The drain pipe 72 may guide washing water passed through the filter 110 to the outside of the housing 10. The drain pipe 72 may transfer washing water passed through the filter 110 to the outside of the housing 10. The drain pipe 72 may drain washing water passed through the filter 110 to the outside of the housing 10. The drain pipe 72 may extend from the filter device 100 toward the outside of the housing 10. The drain pipe 72 is also referred to as a drain flow path 72.

The filter discharge pipe 70 may include the circulation pipe 71 and/or the drain pipe 72. For example, the filter discharge pipe 70 may include only the circulation pipe 71. For example, the filter discharge pipe 70 may include only the drain pipe 72. For example, the filter discharge pipe 70 may include both the circulation pipe 71 and the drain pipe 72. That is, the filter discharge pipe 70 may be connected to at least one of the tub 20 or the outside of the housing 10.

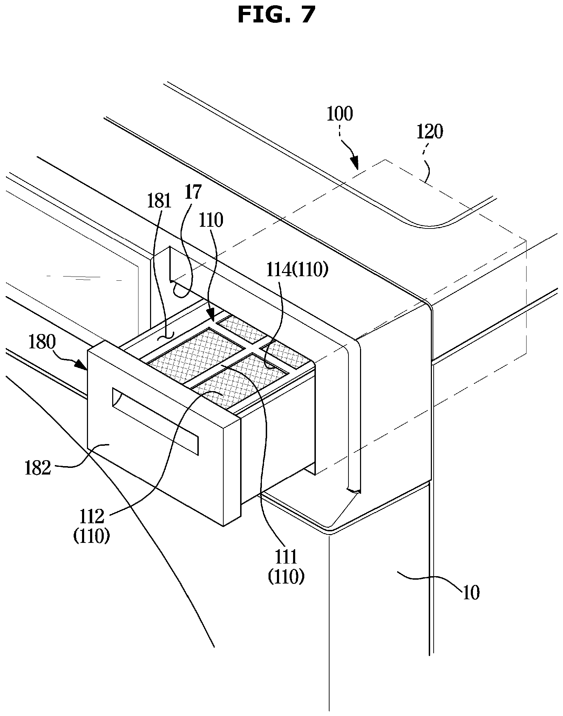

FIGS. 7 to 9 show various examples of a filter device according to an embodiment. Like reference numerals may represent members or components that perform the substantially same functions, and overlapping descriptions may be omitted.

The filter device 100 may include the filter 110. The filter 110 may filter washing water received from the pump device 80. The filter 110 may filter washing water received from the pump device 80 through the connection pipe 60. The filter 110 may collect foreign materials from washing water. For example, the filter 110 may include a fine filter. For example, the filter 110 may be provided in a mesh shape.

For example, the filter 110 may include a filter frame 111. For example, the filter 110 may include a filter body 112 supported on or accommodated in the filter frame 111.

The filter device 100 may include a case 120. The case 120 may accommodate the filter 110. The case 120 may be provided inside the housing 10. The case 120 may be fixed inside the housing 10. For example, the case 120 may have a shape of which a front side opens.

Referring to FIGS. 7 to 9, the filter 110 may be inserted into the second space S2 or taken out of the second space S2. The filter 110 may be taken out of the second space S2 and open to the outside of the housing 10. After the filter 110 is taken out of the second space S2, a user may clean the filter 110 or replace the filter 110 with a new filter. For example, the filter 110 may be movable in a front-rear direction, although not limited thereto.

However, according to the filter 110 being positioned in the first space S1, the filter 110 may be inserted into the first space S1 or taken out of the first space S1. According to the filter 110 being positioned in the third space S3, the filter 110 may be inserted into the third space S3 or taken out of the third space S3. According to the filter 110 being positioned in the fourth space S4, the filter 110 may be inserted into the fourth space S4 or taken out of the fourth space S4.

The washing machine 1 may include a filter opening 17 corresponding to the filter device 100. The filter opening 17 may be formed in the housing 10 to allow the filter 110 to be inserted into and/or taken out of the filter opening 17. For example, the filter opening 17 may open toward the front direction of the housing 10.

Referring to FIG. 7, the filter device 100 may include a drawer 180. The drawer 180 may be accommodated in the case 120.

The drawer 180 may include a filter installing portion 181 in which the filter 110 is detachably installed. The filter installing portion 181 may accommodate the filter 110. The filter installing portion 181 may have a recessed shape to accommodate the filter 110. The filter 110 may be rested on the filter installing portion 181.

The drawer 180 may be inserted into the case 120 or taken out of the case 120. The drawer 180 may be inserted into the case 120 through the filter opening 17. The drawer 180 may be taken out of the case 120 through the filter opening 17. The filter 110 installed in the drawer 180 may be inserted into the case 120 or taken out of the case 120. For example, the drawer 180 may be movable in the front-rear direction (X direction). For example, the drawer 180 may be slidingly movable with respect to the case 120.

The drawer 180 may include a drawer handle 182. The drawer handle 182 may be gripped by a user. The user may grip the drawer handle 182 and insert the drawer 180 into the case 120. The user may grip the drawer handle 182 and take the drawer 180 out of the case 120. For example, the drawer handle 182 may be formed in a front side of the drawer 180. For example, the drawer handle 182 may not be accommodated in the case 120.

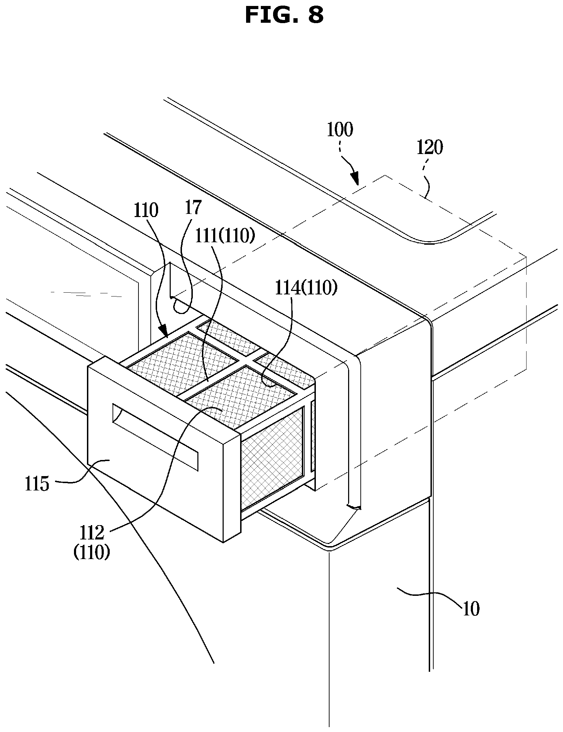

Referring to FIG. 8, the filter 110 may be inserted into the case 120 or taken out of the case 120. The filter 110 may be inserted into the case 120 through the filter opening 17. The filter 110 may be taken out of the case 120 through the filter opening 17. For example, the filter 110 may be movable in the front-rear direction (X direction).

The filter device 100 may include a filter handle 115. The filter handle 115 may be formed in a front side of the filter 110. The filter handle 115 may be gripped by a user. The user may grip the filter handle 115 and insert the filter 110 into the case 120. The user may grip the filter handle 115 and take the filter 110 out of the case 120.

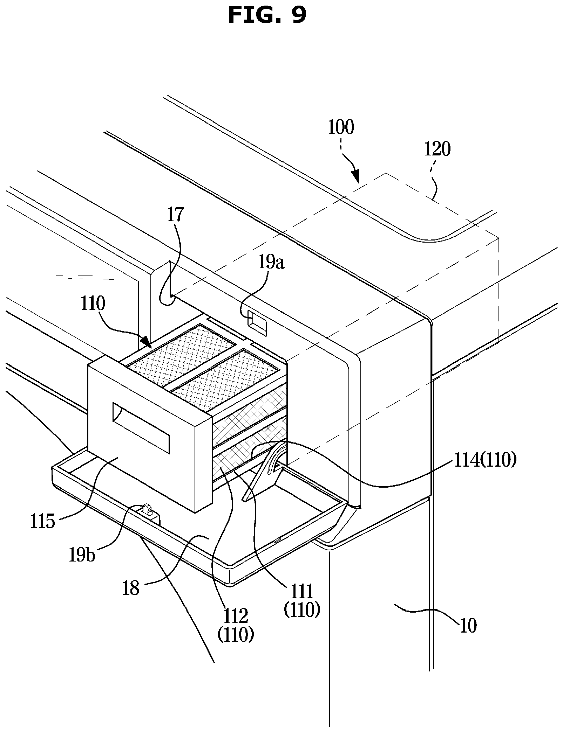

Referring to FIG. 9, the washing machine 1 may include a filter cover 18. The filter cover 18 may cover the filter device 100. The filter cover 18 may cover the filter opening 17. The filter cover 18 may be detachably mounted on the housing 10. For example, the filter cover 18 may be rotatable with respect to the housing 10. For example, the filter cover 18 may be rotatable with respect to the filter opening 17. For example, the filter cover 18 may be hinge-coupled to the housing 10.

For example, the housing 10 may include a housing coupling portion 19a, and the filter cover 18 may include a cover coupling portion 19b corresponding to the housing coupling portion 19a. FIG. 9 shows a case in which the housing coupling portion 19a has a groove shape and the cover coupling portion 19b has a protrusion shape, although not limited thereto. However, unlike FIG. 9, the housing coupling portion 19a may have a protrusion shape and the cover coupling portion 19b may have a groove shape.

When the filter cover 18 is opened, at least a portion of the filter device 100 may be exposed through the filter opening 17. For example, the filter handle 115 of the filter device 100 may be exposed through the filter opening 17.

In the state in which the filter cover 18 is opened, the filter 110 may be inserted into the case 120. In the state in which the filter cover 18 is opened, the filter 110 may be taken out of the case 120.

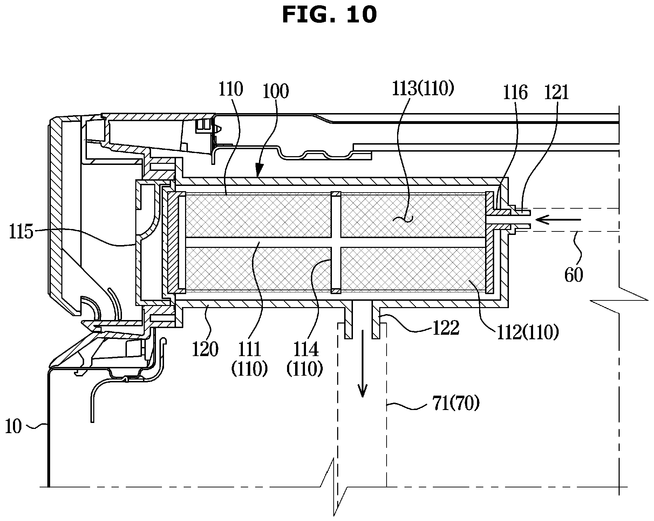

FIGS. 10 to 19 show cross sections of various examples of a filter device according to an embodiment. Like reference numerals may represent members or components that perform the substantially same functions, and overlapping descriptions may be omitted.

Referring to FIGS. 10 to 19, the filter 110 may include the filter frame 111 for supporting the filter body 112 or accommodating the filter body 112.

The filter 110 may include the filter body 112. The filter body 112 may collect foreign materials in washing water. Foreign materials contained in washing water passing through the filter 110 may be attached on the filter body 112. For example, the filter body 112 may be provided in a mesh shape. For example, the filter body 112 may be provided as a nonwoven fabric. However, the filter body 112 is not limited to the above examples, and the filter body 112 may be provided as various kinds and/or shapes capable of collecting foreign materials.

The filter frame 111 may include a filter body installing portion 114 on which the filter body 112 is mounted. For example, the filter body installing portion 114 may be provided as an opening, and the filter body 112 may fill the filter body installing portion 114, although not limited thereto. However, the filter body installing portion 112 may be provided in a recessed shape inside the filter frame 111, and the filter body 112 may be rested on the filter body installing portion 114.

The filter 110 may include a collecting space 113. The filter 110 may form the collecting space 113 therein. The collecting space 113 may mean an internal space formed by the filter frame 111 and/or the filter body 112. The collecting space 113 may mean a space surrounded by the filter frame 111 and/or the filter body 112.

The collecting space 113 may accommodate foreign materials filtered out by the filter 110. While washing water received from the pump device 80 flows from inside of the filter 110 to outside of the filter 110, the collecting space 113 may collect foreign materials contained in the washing water. For example, while washing water passes through the filter body 112, the collecting space 113 may collect foreign materials contained in the washing water. For example, foreign materials may be collected on a surface of the filter body 112 toward the collecting space 113. For example, foreign materials may be collected on an inner surface of the filter body 112.

For example, the filter 110 may include a filter inlet port 116 (see FIGS. 10 to 19). The filter inlet port 116 may accommodate water received from the pump device 80. The filter inlet port 116 may communicate the collecting space 113 with the connection pipe 60. The filter inlet port 116 may communicate the collecting space 113 with an inlet 121 of the case 120. The filter inlet port 116 may correspond to the inlet 121 of the case 120. Washing water pumped by the pump device 80 may pass through the connection pipe 60 and the inlet 121 of the case 120 and flow into the filter inlet port 116.

For example, while the filter 110 is inserted into the case 120, the filter inlet port 116 of the filter 110 may dock with the inlet 121 of the case 120. A sealing member (not shown) may be provided between the filter inlet port 116 and the inlet 121. The sealing member (not shown) may prevent leakage of washing water by sealing between the filter inlet port 116 and the inlet 121.

For example, the filter inlet port 116 may include a first filter inlet port 1161 corresponding to a first inlet port 1211 of the case 120. While the filter 110 is inserted into the case 120, the first filter inlet port 1161 may dock with the first inlet port 1211.

For example, the filter inlet port 116 may include a second filter inlet port 1162 corresponding to a second inlet port 1212 of the case 120. While the filter 110 is inserted into the case 120, the second filter inlet port 1162 may dock with the second inlet port 1212.

The filter inlet port 116 is also referred to as a filter inlet portion 116. The filter inlet port 116 is also referred to as a filter port 116.

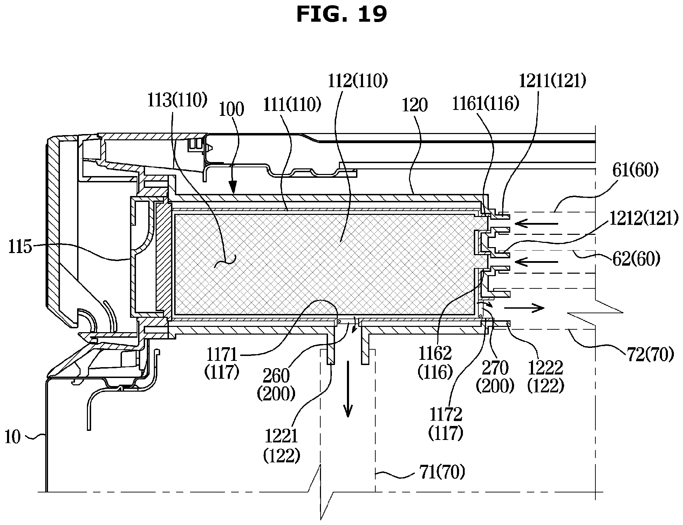

For example, the filter 110 may include a filter outlet port 117 (see FIG. 19). The filter outlet port 117 may discharge filtered washing water. The filter outlet port 117 may discharge washing water passed through the filter body 112. The filter outlet port 117 may communicate the collecting space 113 with the filter discharge pipe 70. The filter outlet port 117 may correspond to the collecting space 113 and an outlet 122 of the case 120 which will be described below. Washing water passed through the filter body 112 may pass through the filter outlet port 117 and flow into the filter discharge pipe 70.

For example, while the filter is inserted into the case 120, the filter outlet port 117 of the filter 110 may dock with the outlet 122 of the case 120. A sealing member (not shown) may be provided between the filter outlet port 117 and the outlet 122. The sealing member (not shown) may prevent leakage of washing water by sealing between the filter outlet port 117 and the outlet 122.

For example, the filter outlet port 117 may include a first filter outlet port 1171 corresponding to a first outlet port 1221 of the case 120. While the filter 110 is inserted into the case 120, the first filter outlet port 1171 may dock with the first outlet port 1221.

For example, the filter outlet port 117 may include a second filter outlet port 1172 corresponding to a second outlet port 1222 of the case 120. While the filter 110 is inserted into the case 120, the filter outlet port 1171 may dock with the second outlet port 1222.

The filter outlet port 117 is also referred to as a filter outlet portion 117. The filter outlet port 117 is also referred to as a filter port 117.

The case 120 may include the inlet 121. The inlet 121 may be connected to the pump device 80. The inlet 121 may be connected to the pump device 80 through the connection pipe 60. Washing water pumped by the pump device 80 may flow into the inlet 121 of the case 120 through the connection pipe 60. The inlet 121 may enable washing water to flow toward the filter 110. The inlet 121 may correspond to the filter inlet port 116 of the filter 110.

The case 120 may include the outlet 122. The outlet 122 may discharge washing water passed through the filter 110. The outlet 122 may be connected to the tub 20 and/or the outside of the housing 10. The outlet 122 may be connected to the tub 20 and/or the outside of the housing 10 through the filter discharge pipe 70. The outlet 122 may discharge washing water passed through the filter 110 to the filter discharge pipe 70. The outlet 122 may discharge washing water passed through the filter 110 to the circulation pipe 71 or the drain pipe 72. The outlet 122 may correspond to the filter outlet port 117 of the filter 110.

For example, the circulation pipe 71 may extend from the outlet 122 of the case 120 to the tub 20.

For example, the drain pipe 72 may extend from the outlet 122 of the case 120 to the outside of the housing 10.

An example of the filter device 100 will be described with reference to FIG. 10.

Referring to FIG. 10, the case 120 may include the inlet 121 connected to the connection pipe 60. For example, the connection pipe 60 may be the first connection pipe 61. The case 120 may include the outlet 122 connected to the circulation pipe 71.

In FIG. 10, the inlet 121 is shown to be formed in a rear side of the case 120, and the outlet 122 is shown to be formed in a lower side of the case 120, although not limited thereto. However, the position of the inlet 121 is not limited as long as the inlet 121 is capable of receiving washing water from the connection pipe 60. The position of the outlet 122 is not limited as long as the outlet 122 is capable of discharging washing water to the circulation pipe 71.

Washing water pumped by the pump device 80 may pass through the filter 110 and be guided to the tub 20. Washing water may circulate through the tub 20, the pump device 80, and the filter device 100. Washing water may circulate through the tub 20, the pump device 80, and the filter 110.

An example of a flow of circulating washing water will be described. Washing water pumped by the pump device 80 may flow into the filter device 100 through the connection pipe 60. Washing water pumped by the pump device 80 may flow into the inlet 121 of the case 120 through the connection pipe 60. The washing water passed through the inlet 121 of the case 120 may flow toward the filter 100. The washing water passed through the inlet 121 of the case 120 may flow into the inside of the filter 110 through the filter inlet port 116. The washing water inside the filter 110 may be filtered out by the filter body 112 while flowing to the outside of the filter 110. While the washing water inside the filter 110 passes through the filter body 112 and flows to the outside of the filter 110, foreign materials may be filtered out from the washing water. The foreign materials may not pass through the filter body 112 and be accommodated in the collecting space 113. The washing water passed through the filter 110 may flow between the filter 110 and the case 120. The washing water flowing between the filter 110 and the case 120 may be discharged through the outlet 122 of the case 120. The washing water discharged through the outlet 122 of the case 120 may flow to the circulation pipe 71. The circulation pipe 71 may guide the washing water to the tub 20. This flow of washing water may also be applied to examples which will be described below.

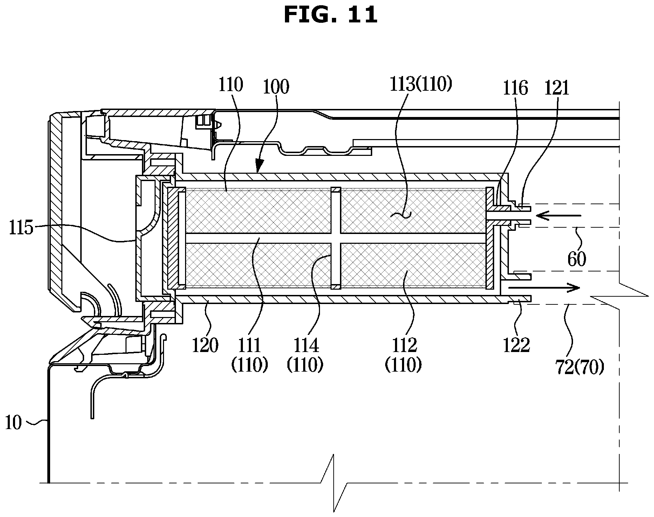

An example of the filter device 100 will be described with reference to FIG. 11.

Referring to FIG. 11, the case 120 may include the inlet 121 connected to the connection pipe 60. For example, the connection pipe 60 may be the second connection pipe 62. The case 120 may include the outlet 122 connected to the drain pipe 72.

In FIG. 11, the inlet 121 and the outlet 122 are shown to be formed in the rear side of the case 120, although not limited thereto. However, the position of the inlet 121 is not limited as long as the inlet 121 is capable of receiving washing water from the connection pipe 60. The position of the outlet 122 is not limited as long as the outlet 122 is capable of discharging washing water to the drain pipe 72.

Washing water pumped by the pump device 80 may pass through the filter 110 and be guided to the outside of the housing 10. Washing water inside the tub 20 may pass through the filter 110 and then be drained to the outside of the housing 10. The washing water inside the tub 20 may be drained to the outside of the housing 10 via the filter device 100.

An example of a flow of washing water that is drained to the outside will be described. Washing water pumped by the pump device 80 may flow to the filter device 100 through the connection pipe 60. The washing water pumped by the pump device 80 may flow to the inlet 121 of the case 120 through the connection pipe 60. The washing water passed through the inlet 121 of the case 120 may flow toward the filter 110. The washing water passed through the inlet 121 of the case 120 may flow into the inside of the filter 110 through the filter inlet port 116. The washing water inside the filter 110 may be filtered by the filter body 112 while flowing to the outside of the filter 110. While the washing water inside the filter 110 passes through the filter body 112 and flows to the outside of the filter 110, foreign materials may be filtered out from the washing water. The foreign materials may not pass through the filter body 112 and may be accommodated in the collecting space 113. The washing water passed through the filter 110 may flow between the filter 110 and the case 120. The washing water flowing between the filter 110 and the case 120 may be discharged through the outlet 122 of the case 120. The washing water discharged through the outlet 122 of the case 120 may flow to the drain pipe 72. The drain pipe 72 may guide the washing water to the outside of the housing 10. This flow of washing water may also be applied to examples which will be described below.

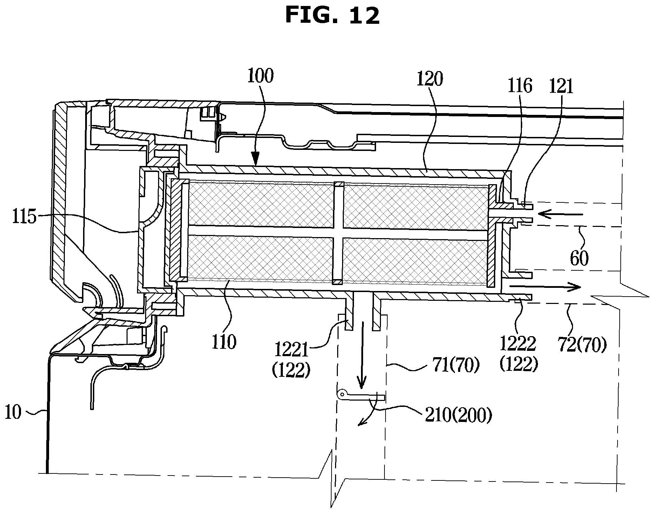

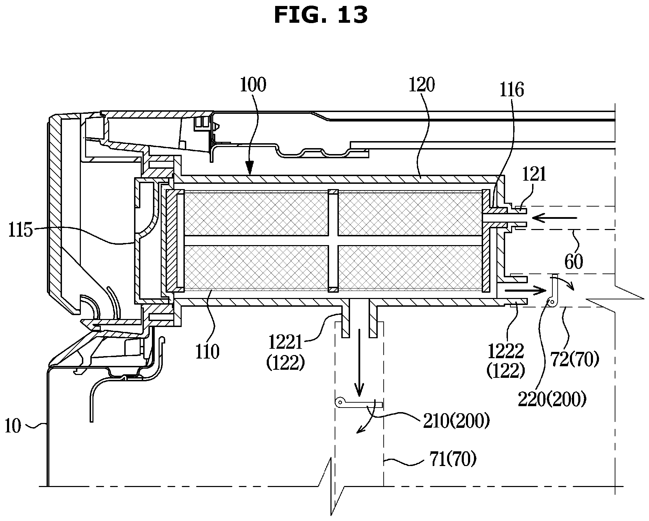

An example of the filter device 100 will be described with reference to FIGS. 12 and 13.

Referring to FIGS. 12 and 13, the case 120 may include the inlet 121 connected to the connection pipe 60. The case 120 may include the outlet 122 connected to the filter discharge pipe 70.

For example, the connection pipe 60 may be provided as a pipe in which the first connection pipe 61 and the second connection pipe 62 are joined, although not limited thereto. However, the connection pipe 60 may be provided as a single pipe.

The outlet 122 may include the first outlet port 1221 connected to the circulation pipe 71, and the second outlet port 1222 connected to the drain pipe 72. For example, the first outlet port 1221 may be positioned at a lower location than the second outlet port 1222. For example, the second outlet port 1222 may be positioned at an upper location than the first outlet port 1221. For example, the circulation pipe 71 may be positioned at a lower location than the drain pipe 72. For example, the drain pipe 72 may be positioned at an upper location than the circulation pipe 71. According to this arrangement, in the case in which the tub 20 is positioned below the filter device 100, the filter device 100 may be easily connected to the tub 20 by the circulation pipe 71. Also, interference between the circulation pipe 71 and the drain pipe 72 may be minimized.

The washing machine 1 may include a flow path switching device 200. The flow path switching device 200 may allow washing water passed through the filter 110 to flow to the circulation pipe 71 or washing water passed through the filter 110 to flow to the drain pipe 72. For example, the flow path switching device 200 may be provided in at least one of the circulation pipe 71, the drain pipe 72, or the filter device 100. For example, the flow path switching device 200 may be controlled by a controller 330 which will be described below.

For example, referring to FIG. 12, the flow path switching device 200 may include a first valve 210.

The first valve 210 may open or close the circulation pipe 71. The first valve 210 may adjust a flow rate of washing water flowing through the circulation pipe 71. The first valve 210 may be installed in the circulation pipe 71. For example, the first valve 210 may rotate to open or close the circulation pipe 71. The first valve 210 is also referred to as a circulation valve 210.

The first valve 210 may be controlled by the controller 330.

For example, the controller 330 may close the first valve 210 during a drain operation. For example, the controller 330 may open the first valve 210 based on termination of a drain operation. For example, the controller 330 may open the first valve 210 during a washing operation and/or a rinsing operation. For example, the controller 330 may open the first valve 210 based on an operation of the circulation pump 81. For example, the controller 330 may close the first valve 210 based on an operation of the drain pump 82.

While the first valve 210 opens, washing water passed through the filter 110 may flow into the tub 20 through the circulation pipe 71. While the first valve 210 opens, washing water passed through the filter 110 may naturally flow toward the first outlet port 1221 because the first outlet port 1221 is positioned at the lower location than the second outlet port 1222. The washing water discharged from the first outlet port 1221 may be guided to the tub 20 through the circulation pipe 71.

While the first valve 210 is closed, washing water passed through the filter 110 may flow to the outside of the housing 10. While the first valve 210 is closed, washing water may be prevented from flowing to the circulation pipe 71. Accordingly, washing water passed through the filter 110 may naturally flow toward the second outlet port 1222. The washing water discharged from the second outlet port 1222 may be guided to the outside of the housing 10 by the drain pipe 72.

For example, referring to FIG. 13, the flow path switching device 200 may include the first valve 210 and a second valve 220. The first valve 210 has been described above, and detailed descriptions thereof will be omitted.

The second valve 220 may open or close the drain pipe 72. The second valve 220 may adjust a flow rate of washing water flowing through the drain pipe 72. The second valve 220 may be installed in the drain pipe 72. For example, the second valve 220 may rotate to open or close the drain pipe 72. The second valve 220 is also referred to as a drain valve 220.

The first valve 210 and the second valve 220 may be selectively opened. For example, the first valve 210 may be opened, and the second valve 220 may be closed. For example, the first valve 210 may be closed, and the second valve 220 may be opened.

The second valve 220 may be controlled by the controller 330.

For example, during a drain operation, the controller 330 may close the first valve 210 and open the second valve 220. For example, the controller 330 may open the first valve 210 and close the second valve 220 based on termination of a drain operation. For example, during a washing operation and/or a rinsing operation, the controller 330 may open the first valve 210 and close the second valve 220. For example, the controller 330 may open the first valve 210 and close the second valve 220 based on an operation of the circulation pump 81. For example, the controller 330 may close the first valve 210 and open the second valve 220 based on an operation of the drain pump 82.

According to the first valve 210 being opened and the second valve 220 being closed, washing water passed through the filter 110 may flow into the tub 20 through the circulation pipe 71.

According to the first valve 210 being closed and the second valve 220 being opened, washing water passed through the filter 110 may flow to the outside of the housing 10 through the drain pipe 72.

However, it is not limited to the examples shown in FIGS. 12 and 13. The second outlet port 1222 may be positioned at a lower location than the first outlet port 1221. The drain pipe 72 may be positioned at a lower location than the circulation pipe 71. In this case, the flow path switching device 200 may include the second valve 220 instead of the first valve 210, or may include both the first valve 210 and the second valve 220.

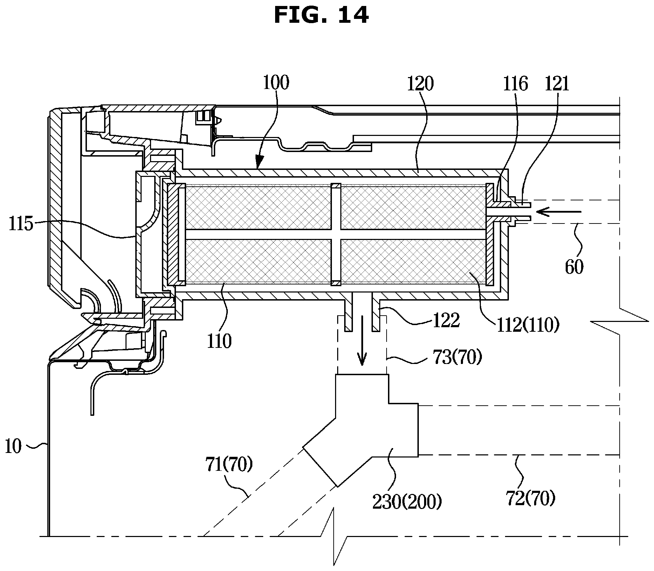

An example of the filter device 100 will be described with reference to FIGS. 14 and 15.

Referring to FIGS. 14 and 15, the case 120 may include the inlet 121 connected to the connection pipe 60. The case 120 may include the outlet 122 connected to the filter discharge pipe 70.

For example, referring to FIG. 14, the connection pipe 60 may be provided as a single pipe, although not limited thereto. However, the connection pipe 60 may be provided as a pipe in which the first connection pipe 61 and the second connection pipe 62 are joined.

For example, referring to FIG. 15, the connection pipe 60 may include the first connection pipe 61 and the second connection pipe 62. The first connection pipe 61 may connect the filter device 100 to the circulation pump 81. Washing water pumped by the circulation pump 81 may flow through the first connection pipe 61. The second connection pipe 62 may connect the filter device 100 to the drain pump 82. Washing water pumped by the drain pump 82 may flow through the second connection pipe 62.

For example, referring to FIG. 15, the inlet 121 may include the first inlet port 1211 connected to the first connection pipe 61, and the second inlet port 1212 connected to the second connection pipe 62. The first inlet port 1211 may receive washing water from the first connection pipe 61. The second inlet port 1212 may receive washing water from the second connection pipe 62. The first connection pipe 61 may connect the first inlet port 1211 to the circulation pump 81. The second connection pipe 62 may connect the second inlet port 1212 to the drain pump 82.

In FIG. 15, the first inlet port 1211 and the second inlet port 1212 are shown to be spaced from each other in an up-down direction (Z direction), although not limited thereto. However, the first inlet port 1211 and the second inlet port 1212 may be positioned at the same height. The first inlet port 1211 and the second inlet port 1212 may be spaced from each other in the left-right direction (Y direction). Likewise, the first connection pipe 61 and the second connection pipe 62 may be positioned at the same height. The first connection pipe 61 and the second connection pipe 62 may be spaced from each other in the left-right direction (Y direction).

Referring to FIGS. 14 and 15, the filter discharge pipe 70 may include a main pipe 73 extending from the outlet 122. The filter discharge pipe 70 may include the circulation pipe 71 and the drain pipe 72. The circulation pipe 71 and the drain pipe 72 may diverge from the main pipe 73. For example, it may be understood that the main pipe 73 and the circulation pipe 71 are provided as one body and the drain pipe 72 diverges from the circulation pipe 71. For example, it may also be understood that the main pipe 73 and the drain pipe 72 are provided as one body and the circulation pipe 71 diverges from the drain pipe 72.

The flow path switching device 200 may include a third valve 230 provided at a branch point of the circulation pipe 71 and the drain pipe 72. The third valve 230 may selectively open the circulation pipe 71 and the drain pipe 72. The third valve 230 may open any one of the circulation pipe 71 and the drain pipe 72. For example, the third valve 230 may be provided as a Y-shape switching valve.

The third valve 230 may be controlled by the controller 330.

For example, during a drain operation, the controller 330 may control the third valve 230 to close the circulation pipe 71 and open the drain pipe 72. For example, the controller 330 may control the third valve 230 to open the circulation pipe 71 and close the drain pipe 72 based on termination of a drain operation. For example, during a washing operation and/or a rinsing operation, the controller 330 may control the third valve 230 to open the circulation pipe 71 and close the drain pipe 72. For example, the controller 330 may control the third valve 230 to open the circulation pipe 71 and close the drain pipe based on an operation of the circulation pump 81. For example, the controller 330 may control the third valve 230 to close the circulation pipe 71 and open the drain pipe 72 based on an operation of the drain pump 82.

While the circulation pipe 71 is opened and the drain pipe 72 is closed, washing water passed through the filter 110 may flow into the tub 20 through the circulation pipe 71.

While the circulation pipe 71 is closed and the drain pipe 72 is opened, washing water passed through the filter 110 may flow into the outside of the housing 10 through the drain pipe 72.

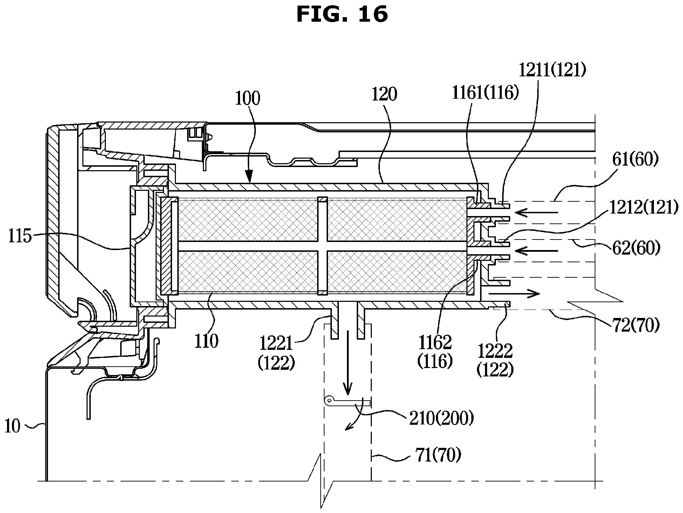

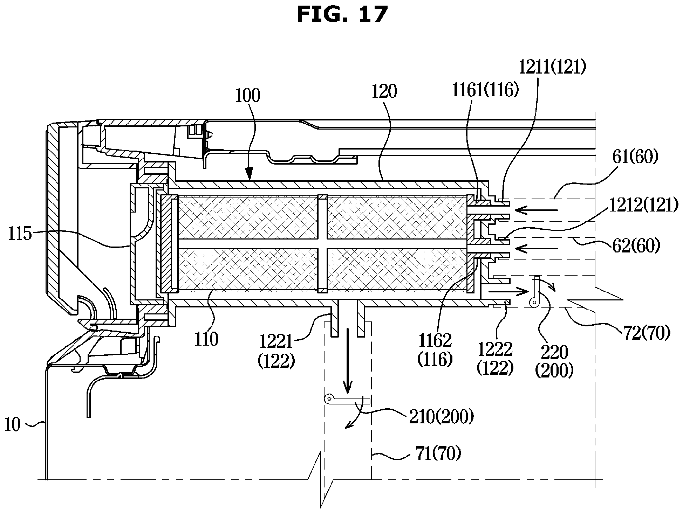

An example of the filter device 100 will be described with reference to FIGS. 16 and 17.

Referring to FIGS. 16 and 17, the inlet 121 may include the first inlet port 1211 connected to the first connection pipe 61, and the second inlet port 1212 connected to the second connection pipe 62. Unlike FIGS. 16 and 17, the first inlet port 1211 and the second inlet port 1212 may be positioned at the same height.

The outlet 122 may include the first outlet port 1221 connected to the circulation pipe 71, and the second outlet port 1222 connected to the drain pipe 72. For example, the first outlet port 1221 may be positioned at a lower position than the second outlet port 1222, although not limited thereto. However, the first outlet port 1221 may be positioned at an upper location than the second outlet port 1222. In this case, the flow path switching device 200 may include the second valve 220 instead of the first valve 210 or may include both the first valve 210 and the second valve 220.

Washing water pumped by the circulation pump 81 may be guided to the first inlet port 1211 by the first connection pipe 61. Washing water received through the first inlet port 1211 may pass through the filter 110 and then flow to the circulation pipe 71.

Washing water pumped by the drain pump 82 may be guided to the second inlet port 1222 by the second connection pipe 62. The washing water received through the second inlet port 1222 may pass through the filter 110 and then flow to the drain pipe 72.

For example, referring to FIG. 16, the flow path switching device 200 may include the first valve 210. The first valve 210 may open or close the circulation pipe 71. The first valve 210 may be controlled by the controller 330. The first valve 210 has been described above, and accordingly, detailed descriptions thereof will be omitted.

For example, referring to FIG. 17, the flow path switching device 200 may include the first valve 210 and the second valve 220. The second valve 220 may open or close the drain pipe 72. The second valve 220 may be controlled by the controller 330. The second valve 220 has been described above, and accordingly, detailed descriptions thereof will be omitted.

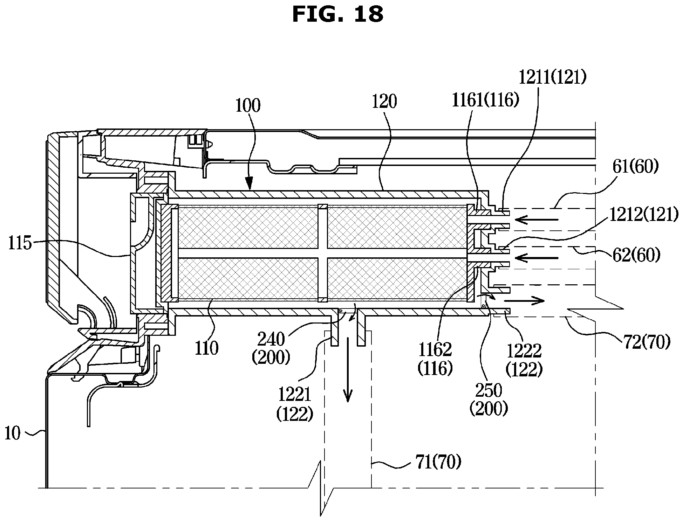

An example of the filter device 100 will be described with reference to FIG. 18.

Referring to FIG. 18, the inlet 121 may include the first inlet port 1211 connected to the first connection pipe 61, and the second inlet port 1212 connected to the second connection pipe 62.

Referring to FIG. 18, the outlet 122 may include the first outlet port 1221 connected to the circulation pipe 71, and the second outlet port 1222 connected to the drain pipe 72.

For example, the flow path switching device 200 may include a fourth valve 240. The fourth valve 240 may be installed in the filter device 100. The fourth valve 240 may open or close the first outlet port 1221. The fourth valve 240 may rotate to open or close the first outlet port 1221.

For example, the flow path switching device 200 may include a fifth valve 250. The fifth valve 250 may be installed in the filter device 100. The fifth valve 250 may open or close the second outlet port 1222. The fifth valve 250 may rotate to open or close the second outlet port 1222.

The fourth valve 240 and the fifth valve 250 may be selectively opened. For example, the fourth valve 240 may be opened, and the fifth valve 250 may be closed. For example, the fourth valve 240 may be closed, and the fifth valve 250 may be opened.

The fourth valve 240 may be controlled by the controller 330.

The fifth valve 250 may be controlled by the controller 330.

For example, during a drain operation, the controller 330 may close the fourth valve 240 and open the fifth valve 250. For example, the controller 330 may open the fourth valve 240 and close the fifth valve 220 based on termination of a drain operation. For example, during a washing operation and/or a rinsing operation, the controller 330 may open the fourth valve 240 and close the fifth valve 250. For example, the controller 330 may open the fourth valve 240 and close the fifth valve 250 based on an operation of the circulation pump 81. For example, the controller 330 may close the fourth valve 240 and open the fifth valve 250 based on an operation of the drain pump 82.

While the fourth valve 240 is opened and the fifth valve 250 is closed, washing water passed through the filter 110 may flow to the tub 20 through the circulation pipe 71.

While the fourth valve 240 is closed and the fifth valve 250 is opened, washing water passed through the filter 110 may flow to the outside of the housing 10 through the drain pipe 72.

Meanwhile, unlike FIG. 18, any of the fourth valve 240 or the fifth valve 250 may be omitted. For example, in the case in which washing water naturally flows toward the first outlet port 1221 because the first outlet port 1221 is positioned at a lower location than the second outlet port 1222, the flow path switching device 200 may include only the fourth valve 240. For example, in the case in which washing water naturally flows toward the second outlet port 1222 because the second outlet port 1222 is positioned at a lower location than the first outlet port 1221, the flow path switching device 200 may include only the fifth valve 250.

An example of the filter device 100 will be described with reference to FIG. 19.

Referring to FIG. 19, the inlet 121 may include the first inlet port 1211 connected to the first connection pipe 61, and the second inlet port 1212 connected to the second connection pipe 62.

Referring to FIG. 19, the outlet 122 may include the first outlet port 1221 connected to the circulation pipe 71, and the second outlet port 1222 connected to the drain pipe 72.

The filter 110 may include the first filter inlet port 1161 and the second filter inlet port 1162. The filter 110 may include the first filter outlet port 1171 and the second filter outlet port 1172.

The connection pipe 60 may include the first connection pipe 61 and the second connection pipe 62. The filter discharge pipe 70 may include the circulation pipe 71 and the drain pipe 72.

For example, the flow path switching device 200 may include a sixth valve 260. The sixth valve 260 may be installed in the filter device 100. The sixth valve 260 may open or close the first filter outlet port 1171. The sixth valve 260 may rotate to open or close the first filter outlet port 1171.

For example, the flow path switching device 200 may include a seventh valve 270. The seventh valve 270 may be installed in the filter device 100. The seventh valve 270 may open or close the second filter outlet port 1172. The seventh valve 270 may rotate to open or close the second filter outlet port 1272.

The sixth valve 260 and the seventh valve 270 may be selectively opened. For example, the sixth valve 260 may be opened, and the seventh valve 270 may be closed. For example, the sixth valve 260 may be closed, and the seventh valve 270 may be opened.

The sixth valve 260 may be controlled by the controller 330.

The seventh valve 270 may be controlled by the controller 330.

For example, during a drain operation, the controller 330 may close the sixth valve 260 and open the seventh valve 270. For example, the controller 330 may open the sixth valve 260 and close the fifth valve 220 based on termination of a drain operation. For example, during a washing operation and/or a rinsing operation, the controller 330 may open the sixth valve 260 and close the seventh valve 270. For example, the controller 330 may open the sixth valve 260 and close the seventh valve 270 based on an operation of the circulation pump 81. For example, the controller 330 may close the sixth valve 260 and open the seventh valve 270 based on an operation of the drain pump 82.

While the sixth valve 260 is opened and the seventh valve 270 is closed, washing water passed through the filter 110 may flow to the tub 20 through the circulation pipe 72.

While the sixth valve 260 is closed and the seventh valve 270 is opened, washing water passed through the filter 110 may flow to the outside of the housing 10 through the drain pipe 72.

Meanwhile, unlike FIG. 19, any of the sixth valve 260 or the seventh valve 270 may be omitted. For example, in the case in which washing water naturally flows toward the first filter outlet port 1271 because the first filter outlet port 1271 is positioned at a lower location than the second filter outlet port 1272, the flow path switching device 200 may include only the sixth valve 260. For example, in the case in which washing water naturally flows toward the second filter outlet port 1272 because the second filter outlet port 1272 is positioned at a lower location than the first filter outlet port 1271, the flow path switching device 200 may include only the seventh valve 270.

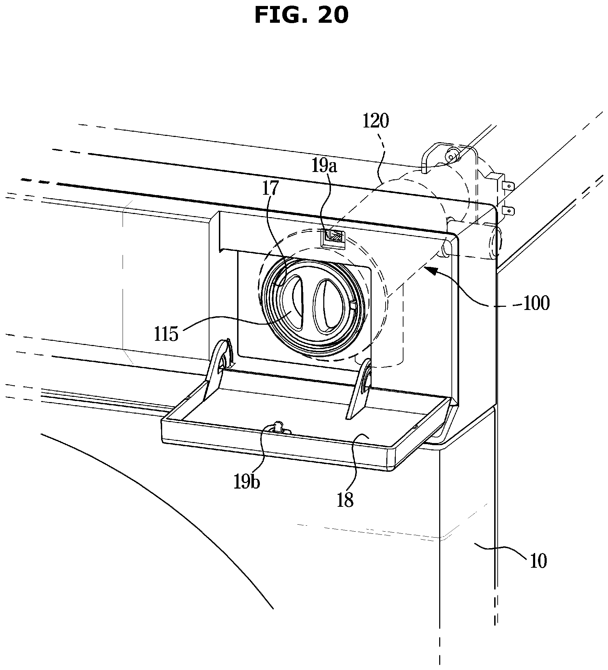

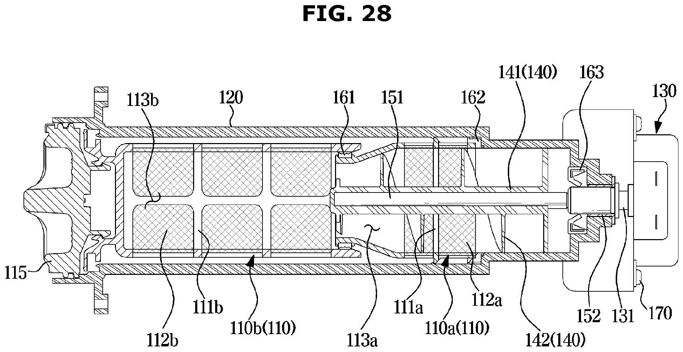

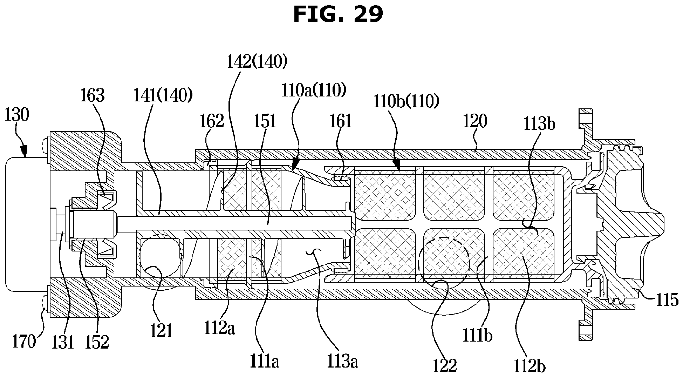

An example of the filter device 100 will be described with reference to FIGS. 20 to 29. The examples related to connections of the pipes 60 and 70, the examples of the flow path switching device 200, the examples of flows of washing water, etc., as described with reference to FIGS. 10 to 19, may also be applied to the filter device 100 shown in FIGS. 20 to 29. Like reference numerals may represent members or components that perform the substantially same functions, and overlapping descriptions may be omitted.

The filter device 100 may include the filter 110. The filter 110 may filter washing water received from the pump device 80. The filter 110 may filter washing water received from the pump device 80 through the connection pipe 60. The filter 110 may collect foreign materials of washing water. For example, the filter 110 may include a fine filter. For example, the filter 110 may be provided in a mesh shape.

At least a portion of the filter 110 may be inserted into the second space S2 or taken out of the second space S2. The filter 110 may be taken out of the second space S2 and open to the outside of the housing 10. As the filter 110 is taken out of the second space S2, a user may clean the filter 110 or replace the filter 110 with a new filter. For example, the filter 110 may be movable in the front-rear direction (X direction).

The filter device 100 may include the case 120. The case 120 may accommodate the filter 110. The case 120 may be provided inside the housing 10. The case 120 may be fixed inside the housing 10. For example, the case 120 may have a shape of which a front side opens.

The filter 110 may be inserted into the case 120 or taken out of the case 120. The filter 110 may be inserted into the case 120 through the filter opening 17. The filter 110 may be taken out of the case 120 through the filter opening 17. The filter opening 17 may communicate with the case 120.

For example, the filter cover 18 may be provided to cover the filter device 100 and the filter opening 17. However, the filter cover 18 may not be an essential component, and may be omitted. In the case in which the filter cover 18 is omitted, the filter handle 115 of the filter device 100 may be exposed in the front direction.

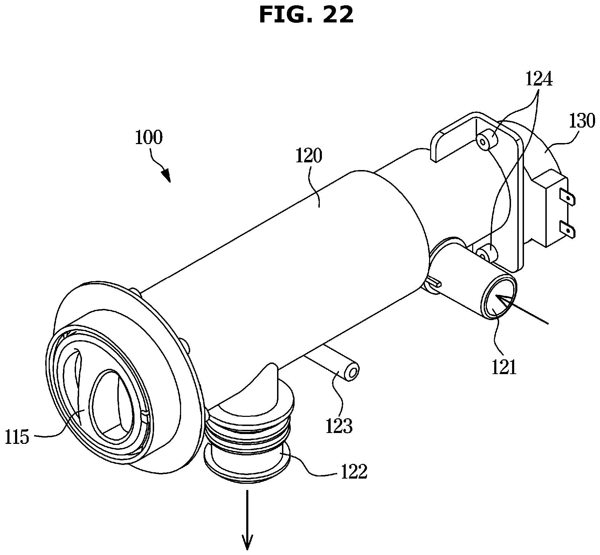

Referring to FIGS. 22 to 26, the case 120 may include the inlet 121. The inlet 121 may be connected to the pump device 80. The inlet 121 may be connected to the pump device 80 through the connection pipe 60. Washing water pumped by the pump device 80 may flow into the inlet 121 of the case 120 through the connection pipe 60. The inlet 121 may be provided through which washing water flows toward the filter 110.

Referring to FIGS. 22 to 26, the case 120 may include the outlet 122. The outlet 122 may discharge washing water passed through the filter 110. The outlet 122 may be connected to the tub 20 and/or the outside of the housing 10. The outlet 122 may be connected to the tub 20 and/or the outside of the housing 10 through the filter discharge pipe 70. The outlet 122 may discharge washing water passed through the filter 110 to the filter discharge pipe 70. The outlet 122 may discharge washing water passed through the filter to the circulation pipe 71 or the drain pipe 72.

Referring to FIGS. 22 to 26, the case 120 may include a residual water port 123. The residual port 123 may discharge washing water remaining inside the case 120 to outside of the case 120. For example, the residual water port 123 may be connected to a hose (not shown) for draining washing water remaining in the case 120. For example, the residual water port 123 may be positioned at a lowest end of the case 120.

An example of the filter device 100 for circulating washing water will be described with reference to FIG. 22. The case 120 may include the inlet 121 and the outlet 122. The inlet 121 may be connected to the connection pipe 60. For example, washing water pumped by the circulation pump 81 may flow into the inlet 121 through the first connection pipe 61. The outlet 122 may be connected to the filter discharge pipe 70. For example, the outlet 122 may be connected to the circulation pipe 71. For example, washing water passed through the filter 110 may flow into the tub 20 through the circulation pipe 71. That is, washing water may circulate through the pump device 80, the filter device 100, and the tub 20.

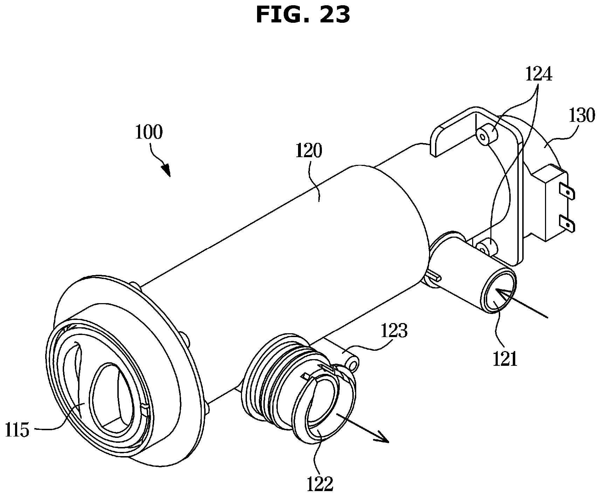

An example of the filter device 100 for draining washing water will be described with reference to FIG. 23. The case 120 may include the inlet 121 and the outlet 122. The inlet 121 may be connected to the connection pipe 60. For example, washing water pumped by the drain pump 82 may flow into the inlet 121 through the second connection pipe 62. The outlet 122 may be connected to the filter discharge pipe 70. For example, the outlet 122 may be connected to the drain pipe 72. For example, washing water passed through the filter 110 may flow to the outside of the housing 10 through the drain pipe 72. That is, washing water inside the tub 20 may be discharged to the outside of the housing 10 via the pump device 80 and the filter device 100.

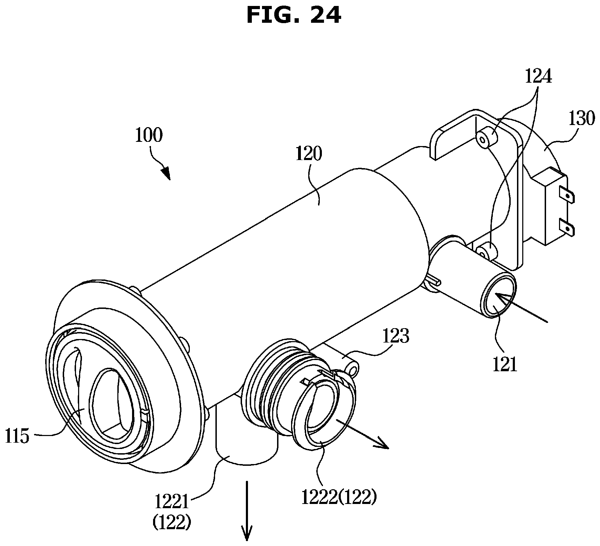

An example of the filter device 100 for circulating or draining washing water will be described with reference to FIG. 24. The case 120 may include the inlet 121 and the outlet 122. For example, the outlet 122 may include the first outlet port 1221 and the second outlet port 1222. The inlet 121 may be connected to the connection pipe 60. The connection pipe 60 may be a single pipe, or a pipe in which the first connection pipe 61 and the second connection pipe 62 are joined. For example, washing water pumped by the pump device 80 may flow into the inlet 121 through the connection pipe 60. The outlet 122 may be connected to the filter discharge pipe 70. The first outlet port 1221 may be connected to the circulation pipe 71. Washing water discharged from the first outlet port 1221 may flow into the tub 20 through the circulation pipe 71. The second outlet port 1222 may be connected to the drain pipe 72. Washing water discharged from the second outlet port 1222 may flow to the outside of the housing 10 through the drain pipe 72.

For example, the flow path switching device 200 may be provided to cause washing water discharged from the first outlet port 1221 shown in FIG. 24 to flow to the circulation pipe 71 or washing water discharged from the second outlet port 1222 shown in FIG. 24 to flow to the drain pipe 72. The examples of the flow path switching device 200 as shown in FIGS. 12, 13, and 16 to 19 may be applied. However, in the case in which the circulation pipe 71 and the drain pipe 72 diverge because the outlet 122 is provided as a single component, the examples of the flow path switching device 200 as shown in FIGS. 14 and 15 may be applied.

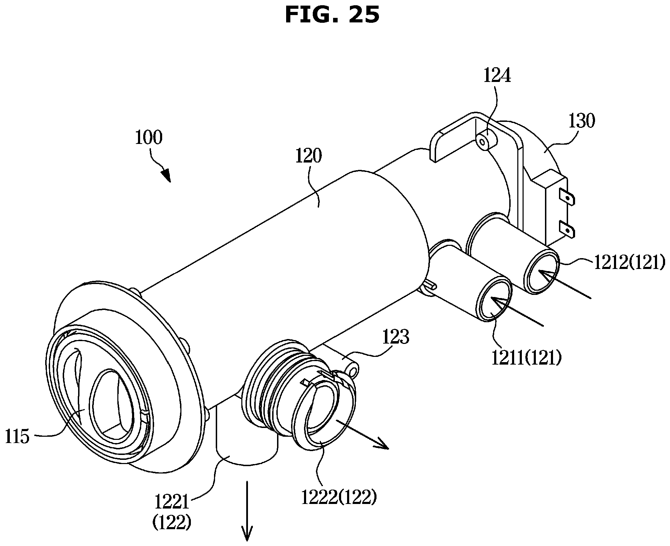

An example of the filter device 100 for circulating or draining washing water will be described with reference to FIG. 25. The case 120 may include the inlet 121 and the outlet 122. For example, the inlet 121 may include the first inlet port 1211 and the second inlet port 1212. The first inlet port 1211 may be connected to the first connection pipe 61. Washing water pumped by the circulation pump 81 may flow into the first inlet port 1211 through the first connection pipe 61. The second inlet port 1212 may be connected to the second connection pipe 62. Washing water pumped by the drain pump 82 may flow into the second inlet port 1212 through the second connection pipe 62. For example, the outlet 122 may include the first outlet port 1221 and the second outlet port 1222. The first outlet port 1221 may be connected to the circulation pipe 71. Washing water discharged from the first outlet port 1221 may flow into the tub 20 through the circulation pipe 71. The second outlet port 1222 may be connected to the drain pipe 72. Washing water discharged from the second outlet port 1222 may flow to the outside of the housing 10 through the drain pipe 72.

For example, the flow path switching device 200 may be provided to cause washing water discharged from the first outlet port 1221 shown in FIG. 25 to flow to the circulation pipe 71 or washing water discharged from the second outlet port 1222 shown in FIG. 25 to flow to the drain pipe 72. The examples of the flow path switching device 200 as shown in FIGS. 12, 13, and 16 to 19 may be applied. However, in the case in which the circulation pipe 71 and the drain pipe 72 diverge because the outlet 122 is provided as a single component, the examples of the flow path switching device 200 as shown in FIGS. 14 and 15 may be applied.

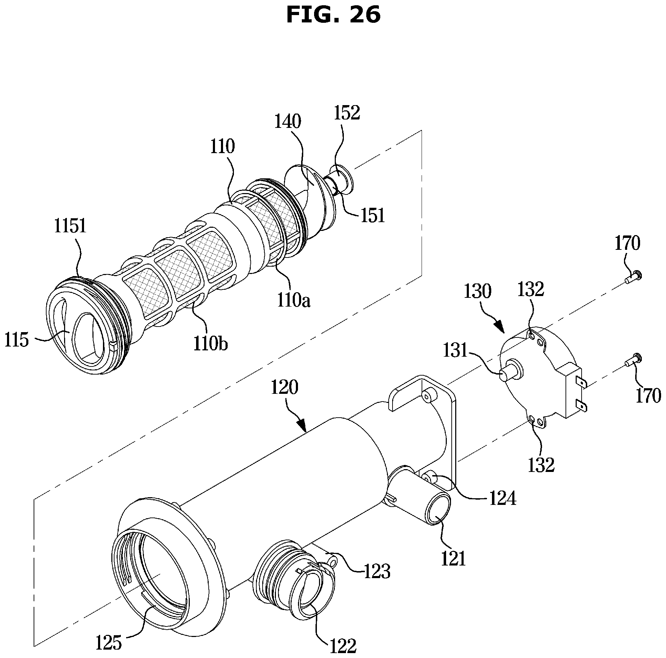

Components of an example of the filter device 100 will be described with reference to FIGS. 26 to 29.

The filter 110 may include a first filter portion 110a and a second filter portion 110b. The first filter portion 110a may be positioned adjacent to the inlet 121 of the case 120. The second filter portion 110b may be positioned adjacent to the outlet 122 of the case 120. For example, the first filter portion 110a may be positioned behind the second filter 110b.

The first filter portion 110a may be detachably coupled to the second filter portion 110b.

The first filter portion 110a may filter washing water received through the inlet 121. For example, the first filter portion 110a may primarily filter washing water flowed into the filter 110.

The first filter portion 110a may include a first filter frame 111a. The first filter portion 110a may include a first filter body 112a supported on the first filter frame 111a.

For example, the first filter frame 111a may include a first filter body installing portion 114a on which the first filter body 112a is installed. For example, the first filter body installing portion 114a may be provided as an opening, and the first filter body 112a may fill the first filter body installing portion 114a, although not limited thereto. However, the first filter frame 111a and the first filter body 112a may be formed in any shape that allows inflow and outflow of washing water.

The first filter portion 110a may include a first collecting space 113a. The first filter portion 110a may form the first collecting space 113a therein. The first collecting space 113a may accommodate foreign materials filtered out by the first filter portion 110a. While washing water received from the pump device 80 flows from inside of the first filter portion 110a to outside of the first filter portion 1 10a, the first collecting space 113a may collect foreign materials contained in the washing water. For example, foreign materials may be collected on a surface of the first filter body 112a toward the first collecting space 113a. For example, foreign materials may be collected on an inner surface of the first filter body 112a.

Meanwhile, a diameter of a side of the first filter portion 110a toward the second filter portion 110b may be reduced. For example, a front portion 116a of the first filter portion 110a may have a shape of which a dimeter is reduced in the front direction. Accordingly, foreign materials of the first filter portion 110a may smoothly move to the second filter portion 110b by a blade 140 which will be described below. For example, while foreign materials of the first filter portion 110a are transferred, the foreign materials may coagulate with each other. Also, when the second filter portion 110b is inserted into the case 120, the second filter portion 110b may easily dock with the first filter portion 110a.

The second filter portion 110b may filter washing water passed through the first filter portion 110a. For example, the second filter portion 110b may secondarily filter washing water passed through the first filter portion 110a. The second filter portion 110b may collect foreign materials separated from the first filter portion 110a.

The second filter portion 110b may include a second filter frame 111b. The second filter portion 110b may include a second filter body 112b supported on the second filter frame 111b.

For example, the second filter frame 111b may include a second filter body installing portion 114b on which the second filter body 112b is installed. For example, the second filter body installing portion 114b may be provided as an opening, and the second filter body 112b may fill the second filter body installing portion 114b, although not limited thereto. However, the second filter frame 111b and the second filter body 112b may be formed in any shape that allows inflow and outflow of washing water.

The second filter portion 110b may include a second collecting space 113b. The second filter portion 110b may form the second collecting space 113b therein. The second collecting space 113b may accommodate foreign materials filtered out by the second filter portion 110b. While washing water received from the pump device 80 flows from inside of the second filter portion 110b to outside of the second filter portion 1 10b, the second collecting space 113b may collect foreign materials contained in the washing water. For example, foreign materials may be collected on a surface of the second filter body 112b toward the second collecting space 113b. For example, foreign materials may be collected on an inner surface of the second filter body 112b.

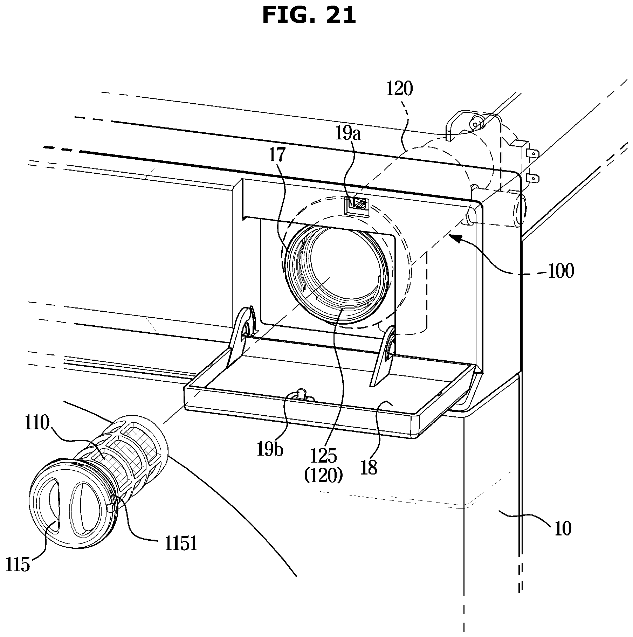

The second filter portion 110b may be inserted into the second space S2 or taken out of the second space S2 (see FIGS. 20 and 21). The second filter portion 110b may be inserted into the case 120 or taken out of the case 120. For example, when the second filter portion 110b is inserted into the second space S2, the second filter portion 110b may dock with the first filter portion 110a. For example, while the second filter portion 110b is taken out of the second space S2, the second filter portion 110b may be separated from the first filter portion 110a. For example, when the second filter portion 110b is inserted into the case 120, the second filter portion 110b may dock with the first filter portion 110a. For example, when the second filter portion 110b is taken out of the case 120, the second filter portion 110b may be separated from the first filter portion 110a.

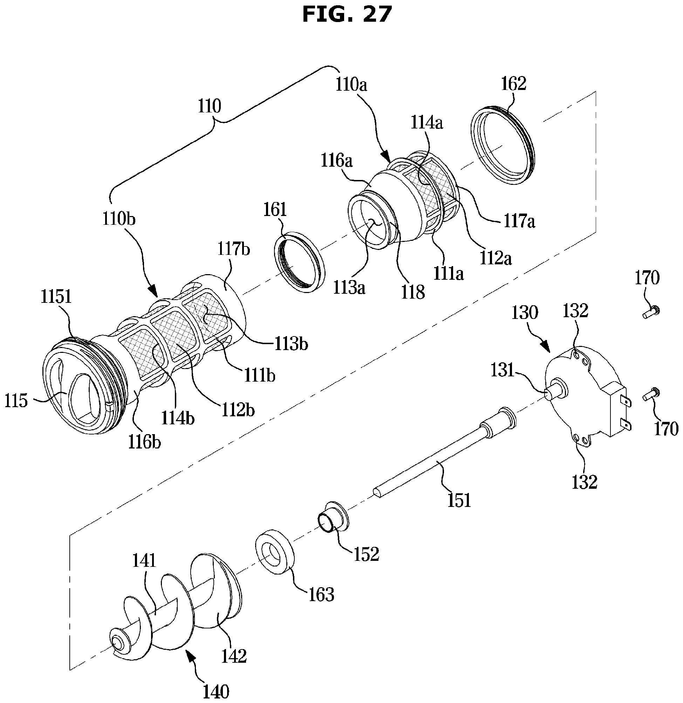

Unlike FIG. 27, the first filter portion 110a and the second filter portion 110b may be provided as a single filter 110. In this case, the first filter frame 111a and the second filter frame 111b may be provided as a single filter frame 111. The first filter body 112a and the second filter body 112b may be provided as a single filter body 112. The first collecting space 113a and the second collecting space 113b may be provided as a single collecting space 113. The first filter body installing portion 114a and the second filter body installing portion 114b may be provided as a single filter body installing portion 114.

Unlike FIG. 27, the filter 110 may include three or more filter portions. For example, a plurality of filter portions may be arranged sequentially along a flow direction of washing water. For example, the plurality of filter portions may be arranged in parallel along the front-rear direction.

The filter device 100 may include the filter handle 115. The filter handle 115 may be provided in the front side of the filter 110. The filter handle 115 may be coupled to a front portion 116b of the second filter portion 110b. The filter handle 115 may be gripped by a user. For example, the user may grip the filter handle 115 and insert the second filter portion 110b into the case 120. For example, the user may grip the filter handle 115 and take the second filter portion 110b out of the case 120.

The filter handle 115 may include a first coupling portion 1151. The first coupling portion 1151 may correspond to an inner surface of the case 120. The first coupling portion 1151 may be detachably coupled to the inner surface of the case 120. For example, the first coupling portion 1151 may be detachably coupled to a second coupling portion 125 formed in the inner surface of the case 120. For example, the first coupling portion 1151 may be rotatable with respect to the second coupling portion 125. For example, the first coupling portion 1151 may include a thread. For example, the second coupling portion 1152 may include a thread. For example, when the filter handle 115 rotates by a preset range in a first direction, the filter handle 115 may become a state that is separable from the case 120. For example, when the filter handle 115 rotates by a preset range in a second direction, the filter handle 115 may become a state fixed to the case 120. For example, the second direction may be an opposite direction of the first direction.

The filter device 100 may include the blade 140. The blade 140 may be positioned adjacent to the filter 110. At least one portion of the blade 140 may be positioned inside the filter 110. At least one portion of the blade 140 may be positioned inside the first filter 110a.

For example, the blade 140 may include a blade shaft 141. The blade shaft 141 may form a center of rotation. The blade shaft 141 may receive a rotating force from a motor 130.

For example, the blade 140 may include a blade wing 142 formed on an outer surface of the blade shaft 141. For example, the blade wing 142 may include a spiral shape.

The blade 140 may transfer foreign materials collected by the filter 110 to one side of the inside of the filter 110. The blade 140 may be rotatable in a state of being in contact with the inner surface of the filter 110. The blade wing 142 may be rotatable in a state of being in contact with the inner surface of the filter 110.

While the blade 140 rotates, the blade 140 may scrape off foreign materials collected on the inner surface of the filter 110. While the blade 140 rotates, the blade 140 may scrape off foreign materials attached on an inner surface of the filter body 112. Accordingly, foreign materials attached on the inner surface of the filter body 112 may be separated from the filter body 112. The separated foreign materials may move to one side of the inside of the filter 110 by a rotation of the blade wing 142.

For example, the blade 140 may transfer foreign materials collected on the first filter portion 110a to the second filter portion 110b. For example, the blade 140 may be rotatable in a state of being in contact with the inner surface of the first filter portion 110a. The blade wing 142 may be rotatable in a state of being in contact with the inner surface of the first filter portion 110a. While the blade 140 rotates, the blade 140 may scrape off foreign materials collected on an inner surface of the first filter body 112a of the first filter portion 110a. Accordingly, foreign materials attached on the inner surface of the first filter body 112a may be separated from the filter body 112a. The separated foreign materials may move toward the second filter portion 110b by a rotation of the blade wing 142. For example, the foreign materials may be transferred in the front direction by a rotation of the blade 140.

The filter device 100 may include the motor 130. The motor 130 may drive the blade 140. The motor 130 may rotate the blade 140. The motor 130 may generate a rotating force.

The motor 130 may be driven and controlled by the controller 330.

For example, the controller 330 may supply driving current to the motor 130. For example, the controller 330 may supply driving current to the motor 130 based on an operation of the pump device 80. For example, the controller 330 may supply driving current to the motor 130 based on an operation of the circulation pump 81 and/or the drain pump 82. For example, the controller 330 may compare a value of driving current supplied to the motor 130 to a preset value, and control the user interface 310. For example, the controller 330 may compare a value of driving current supplied to the motor 130 to the preset value, and stop operating the motor 130. Detailed descriptions thereof will be described below.

The motor 130 may include a coupling portion 132 coupled to the case 120. The coupling portion 132 of the motor 130 may correspond to a coupling portion 124 formed in the case 120. For example, the coupling portion 132 of the motor 130 may include a hole. For example, the coupling portion 124 of the case 120 may include a hole. For example, the coupling portion 132 may be coupled to the coupling portion 124 by a coupling member 170. For example, the coupling member 170 may be a screw.

The filter device 100 may include a connection member 151. The connection member 151 may connect the motor 130 to the blade 140. The connection member 151 may transfer a rotating force generated in the motor 130 to the blade 140. The connection member 151 may be coupled to a motor shaft 131 of the motor 130. The connection member 151 may rotate by interworking with the motor 130. The connection member 151 may be coupled to the blade shaft 141. The blade 140 may rotate by interworking with the connection member 151.

For example, the connection member 151 may extend in the front-rear direction (X direction). For example, the connection member 151 may have a shaft shape. The connection member 151 is also referred to as a connection shaft 151. For example, the connection member 151 may be inserted into the blade shaft 141.

The filter device 100 may include a bearing 152. The bearing 152 may support a weight of the connection member 151. The bearing 152 may rotatably support the connection member 151. The bearing 152 may reduce friction resistance while the connection member 151 rotates. Accordingly, the connection member 151 may smoothly rotate by the bearing 152.

The filter device 100 may include a first sealing member 161. The first sealing member 161 may seal between the first filter portion 110a and the second filter portion 110b. For example, the first sealing member 161 may be positioned between an outer surface of the first filter portion 110a and an inner surface of the second filter portion 110b. For example, the first sealing member 161 may be installed at a groove 118 formed in the front portion 116a of the first filter portion 1 10a, although not limited thereto. However, the first sealing member 161 may be installed at a rear portion 117b of the second filter portion 110a.

The filter device 100 may include a second sealing member 162. The second sealing member 162 may seal between the first filter portion 110a and the case 120. For example, the first second sealing member 162 may be positioned between the outer surface of the first filter portion 110a and the inner surface of the case 120. For example, the second sealing portion 162 may be installed at the rear portion 117a of the first filter portion 110a.

The filter device 100 may include a third sealing member 163. The third sealing member 163 may seal between the connection member 151 and the case 120. For example, the third sealing member 163 may be positioned between an outer surface of the connection member 151 and the inner surface of the case 120.

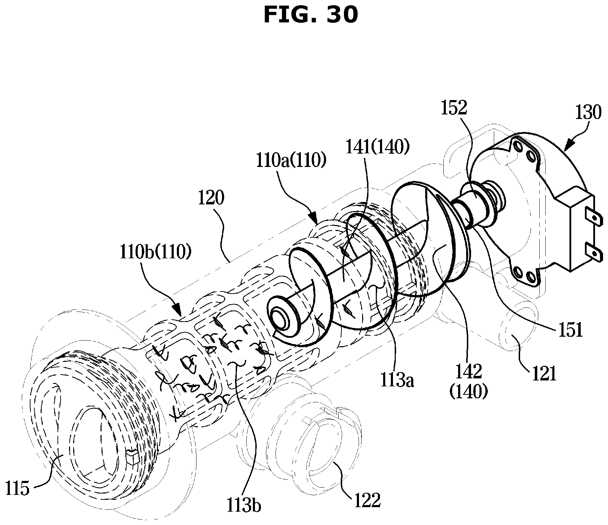

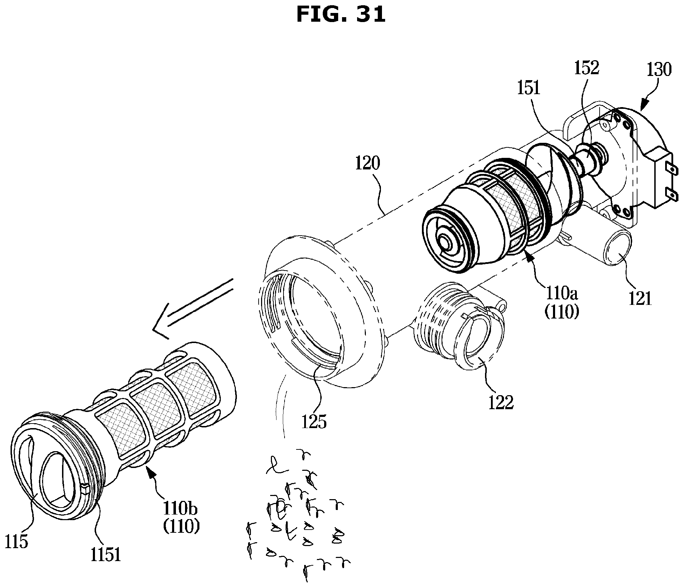

FIG. 30 shows a state in which dirt is collected inside the filter device shown in FIG. 26. FIG. 31 shows a state in which dirt inside the filter device shown in FIG. 30 is emptied.

Referring to FIG. 30, the blade 140 may rotate based on an operation of the pump device 80. For example, the motor 130 may operate based an operation of at least one of the circulation pump 81 or the drain pump 82. The blade 140 may rotate according to an operation of the motor 130. For example, the blade wing 142 may scrape the inner surface of the filter portion 110a in a state of being in contact with the inner surface of the first filter portion 110a. Accordingly, foreign materials collected on the inner surface of the first filter portion 110a may be separated from the inner surface of the first filter portion 1 10a. That is, foreign materials may be prevented from being collected on the inner surface of the first filter portion 110a. The blade wing 142 may move foreign materials of the inside of the first filter portion 110a to one side of the inside of the second filter portion 110b. The second filter portion 110b may collect foreign materials.

Referring to FIG. 31, by separating the second filter portion 110b from the case 120, foreign materials collected in the second filter portion 110b may be emptied. For example, referring to FIG. 31, a user may open the filter cover 18 and access the filter handle 115. The user may grip the filter handle 115 and separate the second filter portion 110b from the case 120. The user may grip the filter handle 115 and take the second filter portion 110b out of the case 120 in the front direction. For example, the user may rotate the filter handle 115 by a preset range in the first direction and separate a combined body of the filter handle 115 and the second filter portion 110b from the case 120. For example, the user may separate the second filter portion 110b from the case 120 and empty foreign materials accommodated in the second filter portion 110b.

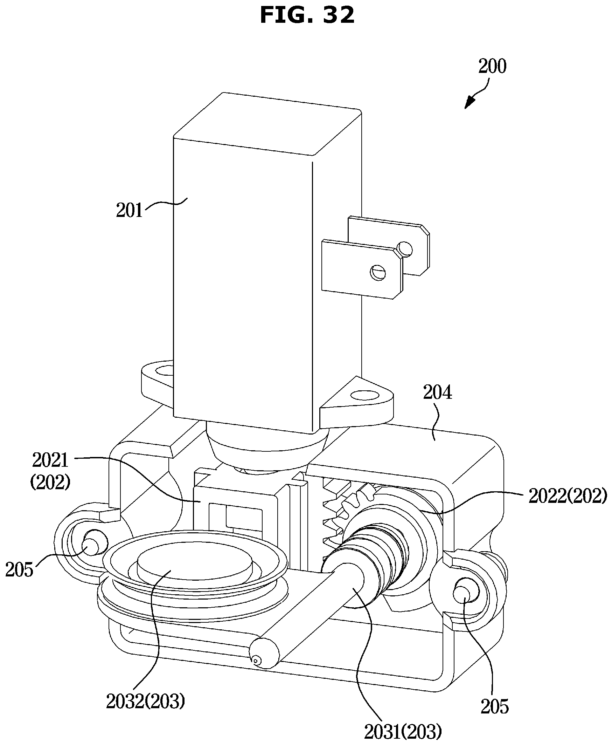

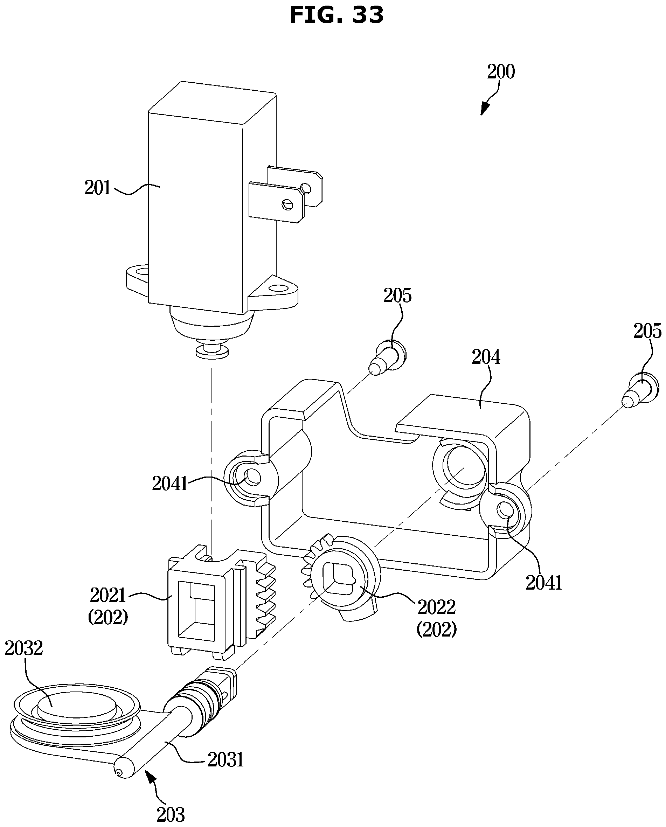

FIG. 32 is a perspective view of an example of a flow path switching device. FIG. 33 is an exploded view of an example of a flow path switching device. The examples of the flow path switching device 200 shown in FIGS. 32 and 33 may be examples of the valves 210, 220, 230, 240, 250, 260, and 270. However, these are only examples, and the flow path switching device 200 may have various shapes and/or configurations.

The flow path switching device 200 may include an actuator 201. For example, the actuator 201 may move linearly. The actuator 201 may receive driving current from the controller 330.

The flow path switching device 200 may include a gear portion 202. The gear portion 202 may move by interworking with the actuator 201.

For example, the gear portion 202 may include a first gear portion 2021. The first gear portion 2021 may be connected to one end of the actuator 201. For example, while the actuator 201 moves linearly, the first gear portion 2021 may move linearly.

For example, the gear portion 202 may include a second gear portion 2022. The second gear portion 2022 may be engaged with the first gear portion 202. For example, while the first gear portion 2021 moves linearly, the second gear portion 2022 may rotate.

The flow path switching device 200 may include an opening/closing portion 203. The opening/closing portion 203 may open or close at least one of the filter discharge pipe 70, the filter outlet port 117, or the outlet 122.

For example, the opening/closing portion 203 may include a gear connecting portion 2031 connected to the second gear portion 2022. The gear connecting portion 2031 may receive a rotating force from the second gear portion 2022. The gear connecting portion 2031 may be rotatable. For example, the gear connecting portion 2031 may have a shaft shape.

For example, the opening/closing portion 203 may include an opening/closing plate 2032 extending from the gear connecting portion 2031. The opening/closing plate 2032 may be rotatable. The opening/closing plate 2032 may rotate on the gear connecting portion 2031. For example, the opening/closing plate 2032 may be installed in at least one of the filter discharge pipe 70, the filter outlet port 117, or the outlet 122. For example, the opening/closing plate 2032 may correspond to a size of a part that the opening/closing plate 2032 opens or closes. For example, the opening/closing plate 2032 may be provided to correspond to at least one of the filter discharge pipe 70, the filter outlet port 117, or the outlet 122.

The flow path switching device 200 may include a valve housing 204. The valve housing 204 may accommodate at least one part of the actuator 201. The valve housing 204 may accommodate at least one part of the gear portion 202. The valve housing 204 may accommodate at least one part of the opening/closing portion 203.

For example, the valve housing 204 may include a housing coupling portion 2041. For example, the housing coupling portion 2041 may be coupled to a part where the flow path switching device 200 is installed, by a coupling member 205, although not limited thereto. However, the flow path switching device 200 may be installed by various known methods.

FIG. 34 is a control block diagram of a washing machine according to an embodiment.

Referring to FIG. 34, the washing machine 1, 2, 3, or 4 according to an embodiment may include a user interface 310, a driving motor 40 that drives the drum 30, a water supply 320, the pump device 80, the flow path switching device 200, and the motor 130 that drives the blade 140.

The user interface 310 may interact with a user.

For example, the user interface 310 may include the control panel 14.

The control panel 14 may include the input device 14a that receives an operation command from a user, and the display 14b that displays operation information of the washing machine. The control panel 14 may provide a user interface that enables a user to interact with the washing machine 1, 2, 3, or 4.

The input device 14a may provide an electrical output signal corresponding to a user input to the controller 330. The input device 14a may include, for example, a power button, a start button, a course selection dial (or a course selection button), and a washing/rinsing/dehydrating setting button. An input button may include, for example, a tact switch, a push switch, a slide switch, a toggle switch, a micro switch, or a touch switch.

The display 14b may receive a signal from the controller 330, and display information corresponding to the received signal. The display 14b may include a screen that displays a washing course selected by a rotation of the course selection dial (or, pressing of the course selection button) and an operation time of the washing machine, and an indicator that displays a washing setting/rinsing setting/dehydrating setting selected by the setting button. The display 14b may include, for example, a Liquid Crystal Display (LCD) panel, a Light Emitting Diode (LED) panel, etc.

The user interface 310 may further include, in addition to the control panel, various components for interacting with a user, which are not shown in the drawings.

For example, the user interface 310 may include a visual indicator provided separately from the control panel 14.

The visual indicator provided separately may be positioned near the filter handle 115. According to various embodiments, the visual indicator may be provided on a surface of the filter handle 115.

As another example, the user interface 310 may include a speaker that provides auditory feedbacks.

The controller 330 may include at least one memory 332 and at least one processor 331 to perform the above-described operations and operations that will be described below.

According to an embodiment, the controller 330 may include at least one memory 332 that stores data in the form of algorithms and/or programs for controlling operations of components in the washing machine 1, 2, 3, or 4, and data of program formats, and at least one processor 331 that performs the above-described operations and operations which will be described below, using the data stored in the at least one memory 332. The memory 332 and the processor 331 may be implemented as separate chips. The processor 331 may include one, two or more processor chips or one, two, or more processing cores. The memory 332 may include one, two, or more memory chips or one, two, or more memory blocks. Also, the memory 332 and the processor 331 may be implemented as a single chip.

The controller 330 may process a user input received through the input device 14a, and control various components (for example, the driving motor 40, the user interface 310, the water supply 320, the pump device 80, the flow path switching device 200, and the motor 130) of the washing machine 1, 2, 3, or 4 based on a result of the processing on the user input.

For example, the controller 330 may control various components of the washing machine 1, 2, 3, or 4 to perform a washing cycle including a water supply operation, a washing operation, a rinsing operation, and/or a dehydrating operation according to a user input applied to the control panel 14.

The driving motor 40 may rotate the drum 30. To this end, the controller 330 may control driving circuitry for applying driving current to the driving motor 40, which is not shown in the drawings.

The driving circuitry may supply driving current to the driving motor 40 in response to a driving signal from the controller 330.

According to an embodiment, the driving circuitry may include rectifier circuitry that rectifies alternating current power of an external power source, direct current link circuitry that removes ripples from the rectified power and outputs direct current power, inverter circuitry that converts the direct current power into driving power in a sinusoidal form and outputs the driving current to the driving motor 40, a current sensor that measures driving current that is supplied to the driving motor 51, and a gate driver that turns on/off a switching device included in the inverter circuitry based on a driving signal from the controller 330.

The controller 330 may measure a load of the driving motor 40 based on a current value measured by a current sensor of the driving circuitry.

The water supply 320 may provide water supplied from an external water supply source to the inside of the tub 20.

To this end, the water supply 320 may include at least one water supply valve 320a.

The at least one water supply valve 320a may include a water supply valve that supplies water supplied form the external water supply source to the detergent supply device 50, and/or a water supply valve that supplies water supplied from the external water supply source directly to the tub 20.

The controller 330 may control the water supply 320 to supply water supplied from the external water supply source to the tub 20 via the detergent supply device 50 or supply water supplied from the external water supply source directly to the tub 20.

The pump device 80 may include at least one pump 81 and/or 82.

According to various embodiments, the pump device 80 may include the circulation pump 81 and the drain pump 82 (see the embodiment of FIG. 15, 16, 17, 18, or 19).

Washing water pumped by the circulation pump 81 may flow into the filter device 100 through the circulation connection pipe 61, and washing water pumped by the drain pump 82 may flow into the filter device 100 through the drain connection pipe 62.

According to various embodiments, the pump device 80 may include a single pump 81 or 82 (see the embodiment of FIG. 12, 13, or 14).

Washing water pumped by the single pump 81 or 82 may flow into the filter device 100 through a single connection pipe 60.

The controller 330 may operate the pump device 80 to cause washing water to flow into the filter device 100.

The flow path switching device 200 may enable washing water flowed into the filter device 100 through the connection pipe (60; 61 or 62) to flow into the circulation pipe 71 or the drain pipe 72.

Water flowed into the circulation pipe 71 may again flow into the tub 20, and water flowed into the drain pipe 72 may be discharged to the outside of the housing 10.

The flow path switching device 200 may include at least one valve.

According to various embodiments, the flow path switching device 200 may include only the first valve 210 that opens or closes the circulation pipe 71 (see the embodiment of FIG. 12 or 16).

In the case in which the flow path switching device 200 includes only the first valve 210 that opens or closes the circulation pipe 71, a major part of water flowed into the filter device 100 may flow into the circulation pipe 71 according to the first valve 210 opening the circulation pipe 71, and according to the first valve 210 closing the circulation pipe 71, water flowed into the filter device 100 may flow into the drain pipe 72.

According to various embodiments, the flow path switching device 200 may include the first valve 210 that opens or closes the circulation pipe 71, and the second valve 220 that opens or closes the drain pipe 72 (see the embodiment of FIG. 13 or 17).

In the case in which the flow path switching device 200 includes the first valve 210 and the second valve 220, water flowed into the filter device 100 may flow into the circulation pipe 71 according to the first valve 210 opening the circulation pipe 71 and the second valve 220 closing the drain pipe 72, and according to the first valve 210 closing the circulation pipe 71 and the second valve 220 opening the drain pipe 72, water flowed into the filter device 100 may flow into the drain pipe 72.

According to various embodiments, the flow path switching device 200 may include only the third valve 230 provided at the branch point of the circulation pipe 71 and the drain pipe 72 (see the embodiment of FIG. 14 or 15).

The third valve 230 may selectively open the circulation pipe 71 and the drain pipe 72.

In the case in which the flow path switching device 200 includes the third valve 230, water flowed into the filter device 100 may flow into the circulation pipe 71 according to the third valve 210 opening the circulation pipe 71, and according to the third valve 230 closing the drain pipe 72, water flowed into the filter device 100 may flow into the drain pipe 72.

According to various embodiments, the flow path switching device 200 may include the fourth valve 240 and the fifth valve 250 installed in the filter device 100 (see the embodiment of FIG. 18). The fourth valve 240 may open or close the first outlet port 1221, and the fifth valve 250 may open or close the second outlet port 1222.

In the case in which the flow path switching device 200 includes the fourth valve 240 and the fifth valve 250, water flowed into the filter device 100 may flow into the circulation pipe 71 according to the fourth valve 240 opening the first outlet port 1221 and the fifth valve 250 closing the second outlet port 1222, and according to the fourth valve 240 closing the first outlet port 1221 and the fifth valve 250 opening the second outlet port 1222, water flowed into the filter device 100 may flow into the drain pipe 72.

According to various embodiments, the flow path switching device 200 may include the sixth valve 260 and the seventh valve 270 installed in the filter device 100 (see the embodiment of FIG. 19). The sixth valve 260 may open or close the first filter outlet port 1171, and the seventh valve 270 may open or close the second filter outlet port 1172.

In the case in which the flow path switching device 200 includes the sixth valve 260 and the seventh valve 270, water flowed into the filter device 100 may flow into the circulation pipe 71 according to the sixth valve 240 opening the first filter outlet port 1171 and the seventh valve 270 closing the second filter outlet port 1172, and according to the sixth valve 260 closing the first filter outlet port 1171 and the seventh valve 270 opening the second filter outlet port 1172, water flowed into the filter device 100 may flow into the drain pipe 72.

However, examples of the flow path switching device 200 are not limited to the above embodiments, and any configuration that enables water flowed into the filter device 100 to selectively flow into the circulation pipe 71 or the drain pipe 72 may be adopted as an example of the flow path switching device 200.

The controller 330 may control the flow path switching device 200 to enable water flowed into the filter device 100 to selectively flow into the circulation pipe 71 or the drain pipe 72.

The motor 130 may drive the blade 140. To this end, the controller 330 may control the driving circuitry that applies driving current to the motor 130, which is not shown in the drawings.

The driving circuitry may supply driving current to the motor 130 in response to a driving signal from the controller 330. A configuration of the driving circuitry connected to the motor 130 may be the same as or different from that of the driving circuitry connected to the driving motor 40.

For example, the driving circuitry connected to the motor 130 may include components for driving a DC motor, differently from the driving circuitry connected to the driving motor 40.

The controller 330 may measure a load of the motor 130 based on a current value measured by the current sensor of the driving circuitry.

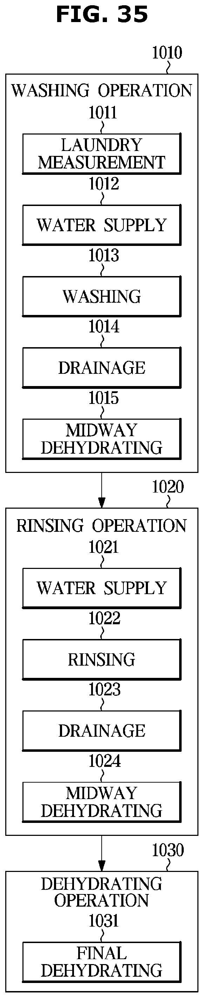

FIG. 35 shows an example of a washing cycle according to an embodiment.

Referring to FIG. 35, the washing machine 1, 2, 3, or 4 may perform a washing operation 1010, a rinsing operation 1020, and a dehydrating operation 1030 sequentially according to a user input through the input device 14a.

By the washing operation 1010, laundry may be washed. More specifically, foreign materials attached to the laundry may be separated from the laundry by chemical actions by a detergent and/or mechanical actions such as falling.

The washing operation 1010 may include laundry measurement 1011 of measuring an amount of laundry, water supply 1012 of supplying water to the tub 20, washing 1013 of rotating the drum 30 at low speed to wash laundry, drainage 1014 of draining water stored in the tub 20, and midway dehydrating 1015 of rotating the drum 30 at high speed to separate water from laundry.

For the laundry measurement 1011, the controller 330 may control the driving circuitry to repeatedly turn on/off the driving motor 51, and measure a load (a weight of the laundry) in the drum 30 based on a counter electromotive force value generated upon turning-off of the driving motor 51.

For the water supply 1012, the controller 330 may control the water supply valve 320a to provide water supplied from an external water supply source to the inside of the tub 20.

For the washing 1013, the controller 330 may control the driving circuitry to rotate the driving motor 40 forward (for example, a clockwise direction) or backward (for example, a counterclockwise direction). By rotating the drum 30, laundry may fall from an upper area of the drum 30 to a lower area of the drum 30 and, by the falling, the laundry may be washed.

During the washing 1013, a circulation operation of causing water in the tub 20 to pass through the filter device 100 and again enter the tub 20 may be performed. According to a circulation operation in which water from which foreign materials have been removed flows into the tub 20, more efficient washing may be performed.

In an embodiment, for the circulation operation, the controller 330 may operate the pump device 80 and control the flow path switching device 200 to open the circulation pipe 71.

In an embodiment, for the circulation operation, the controller 330 may operate the pump device 80 and control the flow path switching device 200 to open the circulation pipe 71 and close the drain pipe 72.

For example, for the circulation operation, the controller 330 may open the first valve 210 (embodiment of FIGS. 12 or 16). For the circulation operation, the controller 330 may open the first valve 210 and close the second valve 220 (embodiment of FIG. 13 or 17). For the circulation operation, the controller 330 may control the third valve 230 to open the circulation pipe 71 (embodiment of FIG. 14 or 15). For the circulation operation, the controller 330 may open the fourth valve 240 and close the fifth valve 250 (embodiment of FIG. 18). For the circulation operation, the controller 330 may open the sixth valve 260 and close the seventh valve 270 (embodiment of FIG. 19).

According to various embodiments, in the case in which the pump device 80 includes both the circulation pump 81 and the drain pump 82, the controller 330 may operate the circulation pump 81 for the circulation operation.

According to various embodiments, in the case in which the pump device 80 includes a single pump 81 or 82, the controller 330 may operate the single pump 81 or 82 for the circulation operation.

The controller 330 may stop operating the circulation pump 81 based on termination of the circulation operation. In the case in which the pump device 80 includes a single pump 81 or 82, the controller 330 may stop operating the single pump 81 or 82.

Also, the controller 330 may control the flow path switching device 200 to close the circulation pipe 71 based on termination of the circulation operation. Various examples of controlling the flow path switching device 200 to close the circulation pipe 71 have been described above, and accordingly, overlapping descriptions will be omitted.

For the drainage 1014, the controller 330 may operate the pump device 80 and control the flow path switching device 200 to open the drain pipe 72.

For example, for the drainage 1014, the controller 330 may close the first valve 210 (embodiment of FIG. 12 or 16). For the drainage 1014, the controller 330 may close the first valve 210 and open the second valve 220 (embodiment of FIG. 13 or 17). For the drainage 1014, the controller 330 may control the third valve 230 to open the drain pipe 72 (embodiment of FIG. 14 or 15). For the drainage 1014, the controller 330 may close the fourth valve 240 and open the fifth valve 250 (embodiment of FIG. 18). For the drainage 1014, the controller 330 may close the sixth valve 260 and open the seventh valve 270 (embodiment of FIG. 19).

According to various embodiments, in the case in which the pump device 80 includes both the circulation pump 81 and the drain pump 82, the controller 330 may operate the drain pump 82 for the drainage 1014.

According to various embodiments, in the case in which the pump device 80 includes a single pump 81 or 82, the controller 330 may operate the single pump 81 or 82 for the drainage 1014.

The controller 330 may stop operating the drain pump 82 based on termination of the drainage 1014. In the case in which the pump device 80 include the single pump 81 or 82, the controller 330 may stop operating the single pump 81 or 82.

For the midway dehydrating 1015, the controller 330 may control the driving circuitry to rotate the driving motor 40 at high speed. By the high-speed rotation of the drum 30, water may be separated from the laundry accommodated in the drum 30 and discharged to the outside of the washing machine 1, 2, 3, or 4.

During the midway dehydrating 1015, rotation speed of the drum 30 may increase in stages. For example, the controller 330 may control the driving circuitry to rotate the driving motor 40 at first rotation speed, and while the driving motor 40 rotates at the first rotation speed, the controller 330 may control the driving motor 40 to increase the rotation speed of the driving motor 40 to second rotation speed, based on a change of driving current of the driving motor 40. The controller 330 may control, while the driving motor 40 rotates at the first rotation speed, the driving motor 40 to increase the rotation speed of the driving motor 40 to third rotation speed, or may control the driving motor 40 to decrease the rotation speed of the driving motor 40 to the second rotation speed, based on a change of driving current of the driving motor 40.

By the rinsing operation 1020, the laundry may be rinsed. More specifically, a detergent or foreign materials remaining in the laundry may be washed away by water.

The rinsing operation 1020 may include water supply 1021 of supplying water to the tub 20, rinsing 1022 of driving the drum 30 to rinse laundry, drainage 1023 of discharging water stored in the tub 20, and midway dehydrating 1024 of driving the drum 30 to separate water from the laundry.

The water supply 1021, the drainage 1023, and the midway dehydrating 1024 of the rinsing operation 1020 may be the same as the water supply 1012, the drainage 1014, and the midway dehydrating 1015 of the washing operation 1010, respectively. During the rinsing operation 1020, the water supply 1021, the rinsing 1022, the drainage 1023, and the midway dehydrating 1024 may be performed one time or several times.

During the rinsing 1022, the controller 330 may perform a circulation operation. A method of performing a circulation operation has been described above, and therefore, detailed descriptions thereof will be omitted.

According to an embodiment, by performing a circulation operation during the rinsing 1022, foreign materials in water accommodated in the tub 20 may be efficiently removed, and rinsing efficiency may be improved.

By the dehydrating operation 1030, the laundry may be dehydrated. More specifically, water may be separated from the laundry by a high-speed rotation of the drum 30, and the separated water may be discharged to the outside of the washing machine 1, 2, 3, or 4.

The dehydrating operation 1030 may include final dehydrating 1031 of separating water from laundry by rotating the drum 30 at high speed. Due to the final dehydrating 1031, final midway dehydrating 1024 of the rinsing operation 1020 may be omitted.

For the final dehydrating 1031, the controller 90 may control the driving circuitry to rotate the driving motor 401 at high speed. By the high-speed rotation of the drum 30, water may be separated from the laundry contained in the drum 30 and discharged to the outside of the washing machine 1, 2, 3, or 4. Also, the rotation speed of the driving motor 40 may increase in stages.

Because an operation of the washing machine 1, 2, 3, or 4 terminates by the final dehydrating 1031, a time for which the final dehydrating 1031 is performed may be longer than a time for which the midway dehydrating 1015 or 1024 is performed.

According to various embodiments, during the dehydrating operation 1030, a drain operation may be performed. For example, during the dehydrating operation 1030, the controller 330 may operate the drain pump 82 and control the flow path switching device 200 to close the circulation pipe 71 and open the drain pipe 72.

As described above, the washing machine 1, 2, 3, or 4 may perform the washing operation 1010, the rinsing operation 1020, and the dehydrating operation 1030 to wash laundry. Particularly, during the midway dehydrating 1015 or 1024 and the final dehydrating 1031, the washing machine 1, 2, 3, or 4 may increase rotation speed of the driving motor 40 rotating the drum 30 in stages, and increase or decrease the rotation speed of the driving motor 40 based on a change of driving current of the driving motor 40.

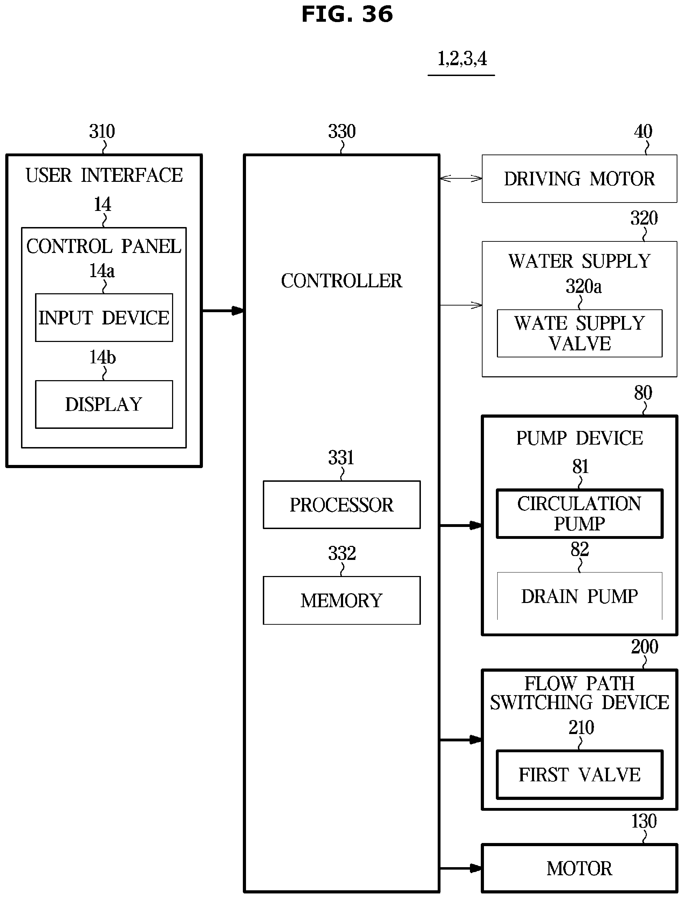

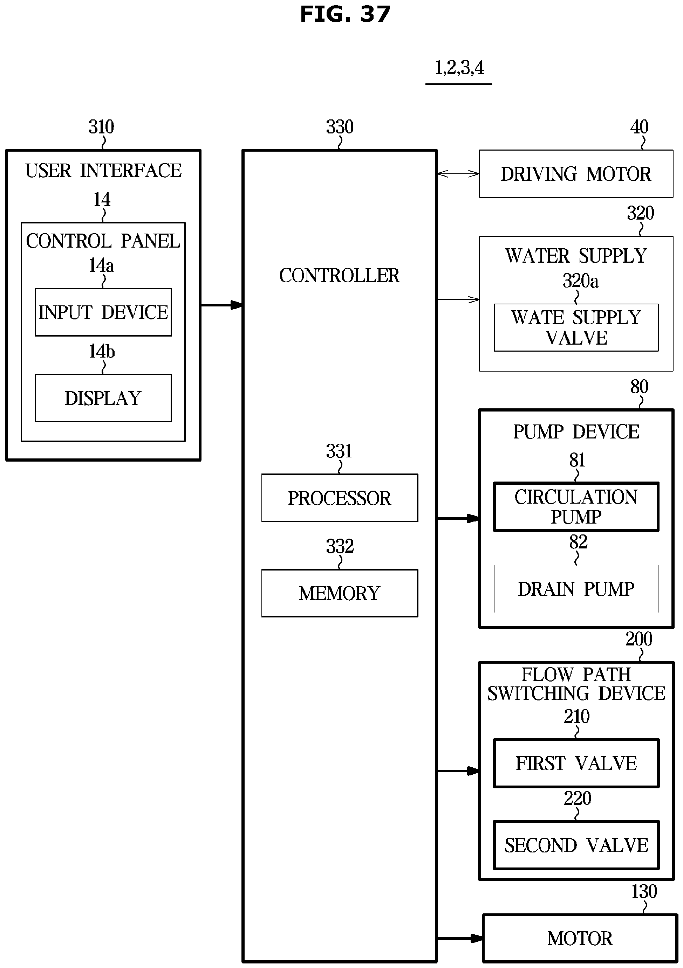

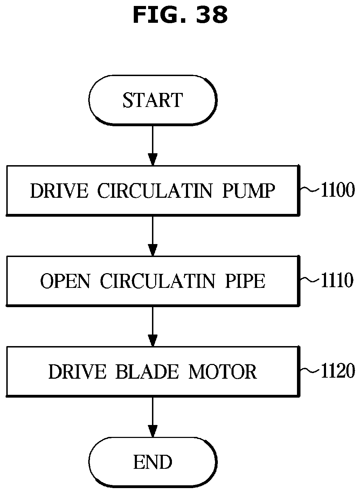

FIG. 36 shows an example of a control block diagram of a washing machine according to an embodiment and flows of signals. FIG. 37 shows an example of a control block diagram of a washing machine according to an embodiment and flows of signals. FIG. 38 is a flowchart illustrating a control method of a washing machine according to an embodiment when a driving condition of a circulation pump is satisfied.

Referring to FIGS. 36 to 37, the controller 330 may control various components based on a signal corresponding to a user input received from the user interface 310.

The pump device 80 may include the circulation pump 81 and the drain pump 82.

The controller 330 may output a control signal for driving the circulation pump 81 for a circulation operation. The circulation pump 81 may operate based on the control signal from the controller 330.

The controller 330 may output a control signal for driving the drain pump 82 for a drain operation. The drain pump 82 may operate based on the control signal from the controller 330.

The controller 330 may output a control signal for driving the motor 130 to rotate the blade 140. The motor 130 may operate based on the control signal from the controller 330.

Referring to FIG. 36, the flow path switching device 200 may include the first valve 210.

The controller 330 may output a control signal for opening or closing the first valve 210. The first valve 210 may be opened or closed based on the control signal from the controller 330.

Referring to FIG. 37, the flow path switching device 200 may include the first valve 210 and the second valve 220.

The controller 330 may output a control signal for opening or closing the first valve 210 and the second valve 220. The first valve 210 and the second valve 220 may be opened or closed based on the control signal from the controller 330.

According to various embodiments, the controller 330 may operate the circulation pump 81 and control the first valve 210 to open the circulation pipe 71.

Also, the controller 330 may operate the circulation pump 81, control the first valve 210 to open the circulation pipe 71, and control the second valve 220 to close the drain pipe 72.

According to various embodiments, the controller 330 may operate the circulation pump 81 and drive the motor 130.

The circulation operation may be performed in the washing operation 1010 and/or the rinsing operation 1020.

Referring to FIG. 38, for the circulation operation, the controller 330 may drive the circulation pump 81 (1100).

The controller 330 may control the flow path switching device 200 to open the circulation pipe 71 based on an operation of the circulation pump 81 (1110).

According to various embodiments, operation 1110 of opening the circulation pipe 71 may further include closing the drain pipe 72.

That is, the controller 330 may control the flow path switching device 200 to open the circulation pipe 71 and close the drain pipe 72, based on an operation of the circulation pump 81.

According to an embodiment, the controller 330 may drive the motor 130 based on an operation of the circulation pump 81 (1120). The blade 140 may rotate by receiving driving current from the motor 130.

That is, while water flows into the filter device 100 by the circulation pump 81, the blade 140 may transfer foreign materials collected by the filter 110 to one side of the inside of the filter 110.

According to an embodiment, by rapidly transferring foreign materials collected by the filter 110 during a circulation operation to one side of the inside of the filter 110, the life space of the filter 110 may be improved.

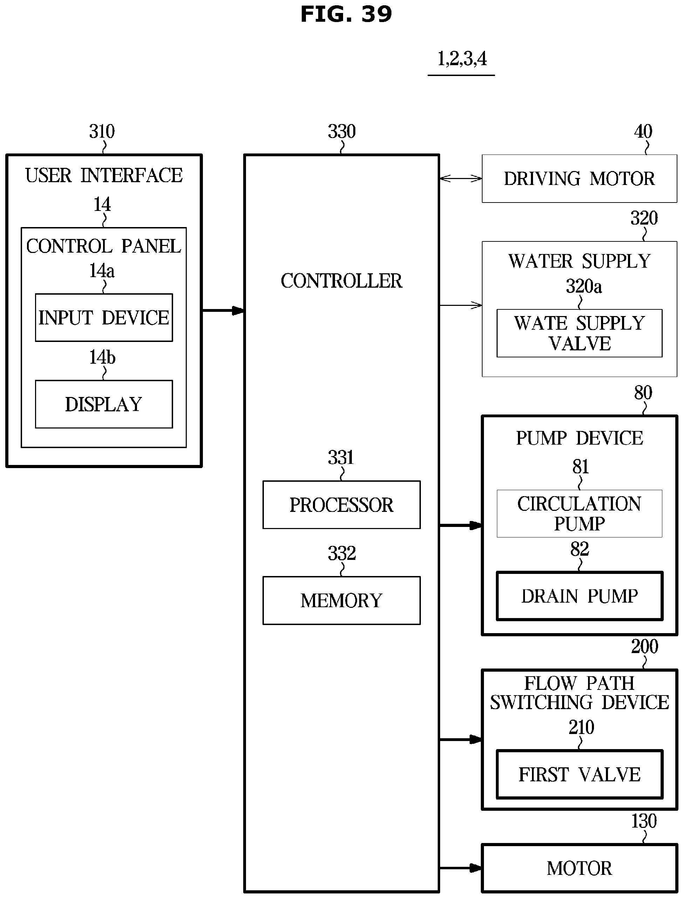

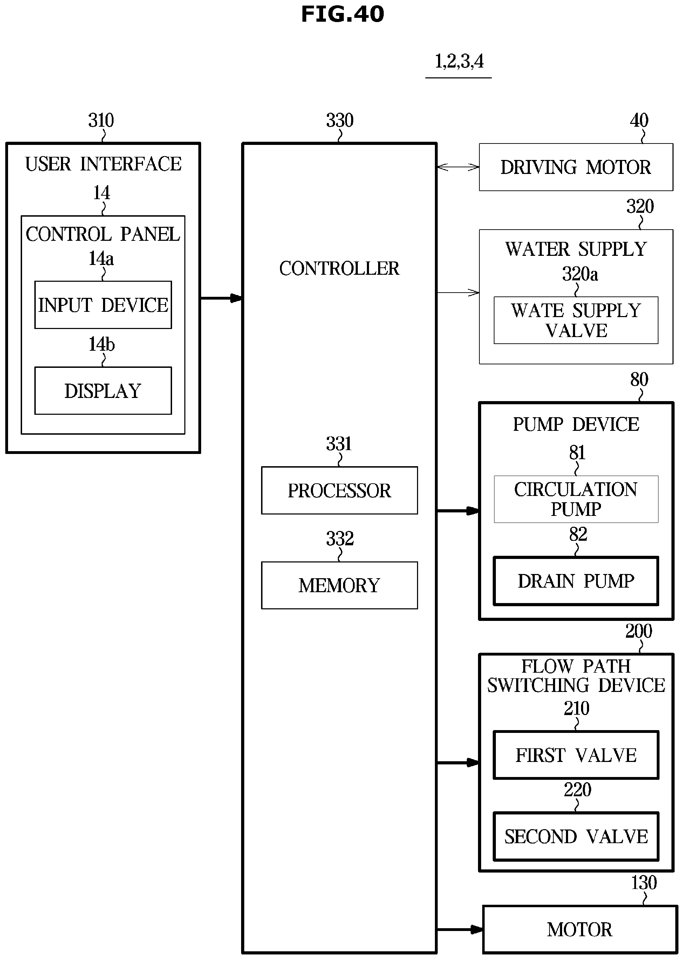

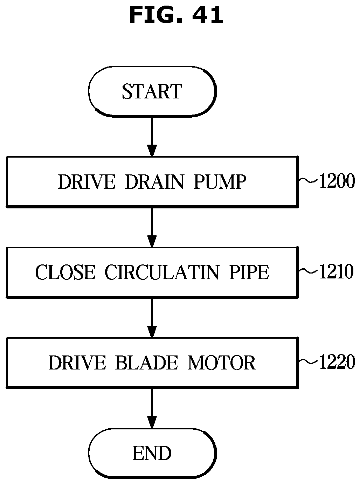

FIG. 39 shows an example of a control block diagram of a washing machine according to an embodiment and flows of signals. FIG. 40 shows an example of a control block diagram of a washing machine according to an embodiment and flows of signals. FIG. 41 is a flowchart illustrating a control method of a washing machine according to an embodiment when a driving condition of a drain pump is satisfied.

Referring to FIGS. 39 and 40, the controller 330 may control various components based on a signal corresponding to a user input received from the user interface 310.

The pump device 80 may include the circulation pump 81 and the drain pump 82.

The controller 330 may output a control signal for driving the circulation pump 81 for a circulation operation. The circulation pump 81 may operate based on the control signal from the controller 330.

The controller 330 may output a control signal for driving the drain pump 82 for a drain operation. The drain pump 82 may operate based on the control signal from the controller 330.

The controller 330 may output a control signal for driving the motor 130 to rotate the blade 140. The motor 130 may operate based on the control signal from the controller 330.

Referring to FIG. 39, the flow path switching device 200 may include the first valve 210.

The controller 330 may output a control signal for opening or closing the first valve 210. The first valve 210 may be opened or closed based on the control signal from the controller 330.

Referring to FIG. 40, the flow path switching device 200 may include the first valve 210 and the second valve 220.

The controller 330 may output a control signal for opening or closing the first valve 210 and the second valve 220. The first valve 210 and the second valve 220 may be opened or closed based on the control signal from the controller 330.

According to various embodiments, the controller 330 may operate the drain pump 82 and control the first valve 210 to close the circulation pipe 71.

Also, the controller 330 may operate the drain pump 82, control the first valve 210 to close the circulation pipe 71, and control the second valve 220 to open the drain pipe 72.

According to various embodiments, the controller 330 may operate the drain pump 82 and drive the motor 130.

The drain operation 1014 or 1023 may be performed in the washing operation 1010 and/or the rinsing operation 1020. According to various embodiments, the drain operation may be performed in the dehydrating operation 1030.

Referring to FIG. 41, the controller 330 may drive the drain pump 82 during the drain operation 1014 or 1023 (1200). For example, the controller 330 may drive the drain pump 82 based on beginning of the drain operation 1014 or 1023.

The controller 330 may control the flow path switching device 200 to close the circulation pipe 71 based on an operation of the drain pump 82 (1210).

According to various embodiments, operation 1210 of closing the circulation pipe 71 may further include opening the drain pipe 72.

That is, the controller 330 may control the flow path switching device 200 to close the circulation pipe 71 and open the drain pipe 72 based on an operation of the drain pump 82.

In an embodiment, the controller 330 may drive the motor 130 based on an operation of the drain pump 82 (1220). The blade 140 may rotate by receiving driving current from the motor 130.

That is, while water flows into the filter device 100 by the drain pump 82, the blade 140 may transfer foreign materials collected by the filter 110 to one side of the inside of the filter 110.

According to the disclosure, by rapidly transferring foreign materials collected by the filter 110 during a drain operation 1014 or 1023 to one side of the inside of the filter 110, the life space of the filter 110 may be improved.

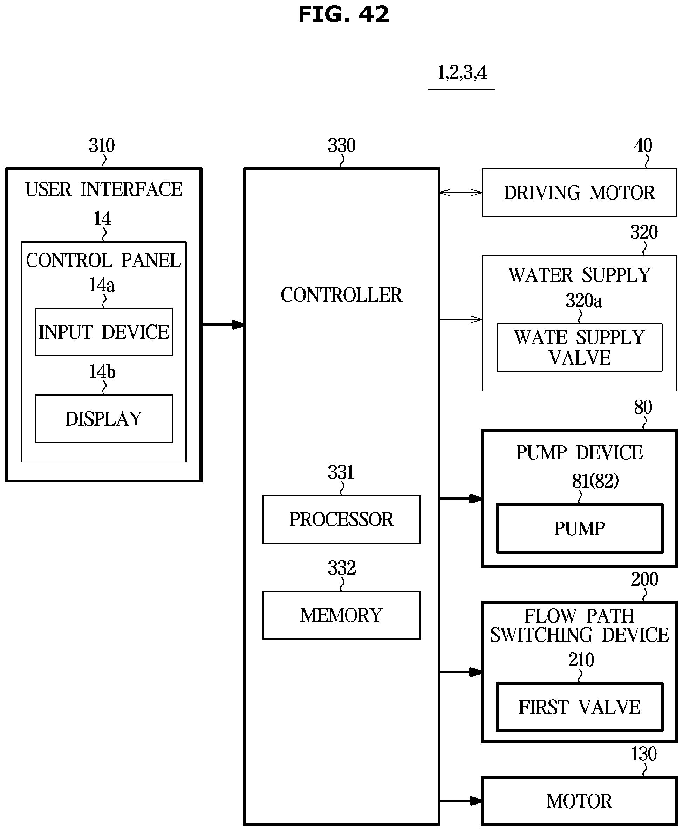

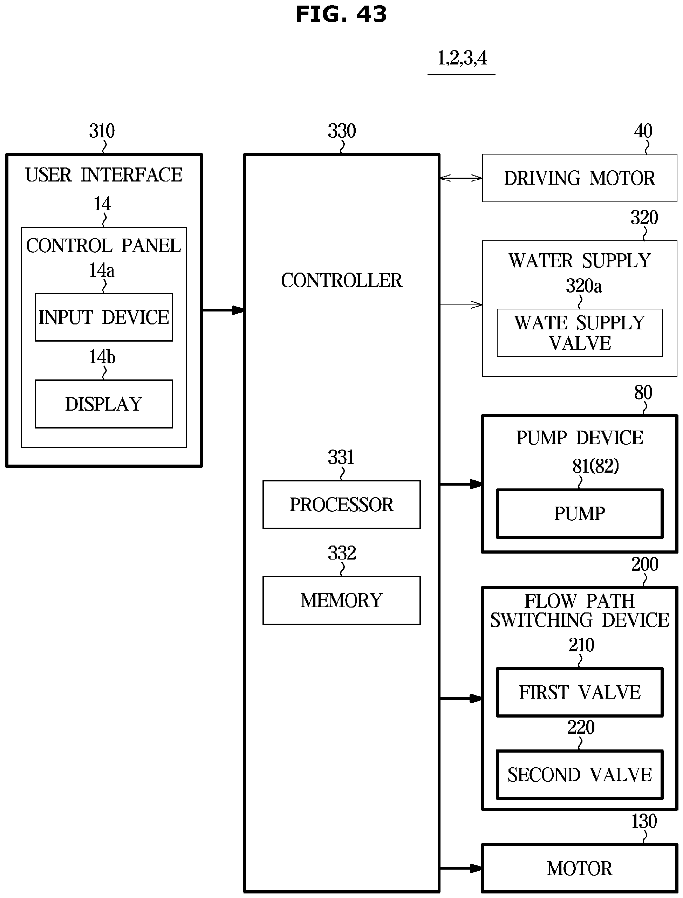

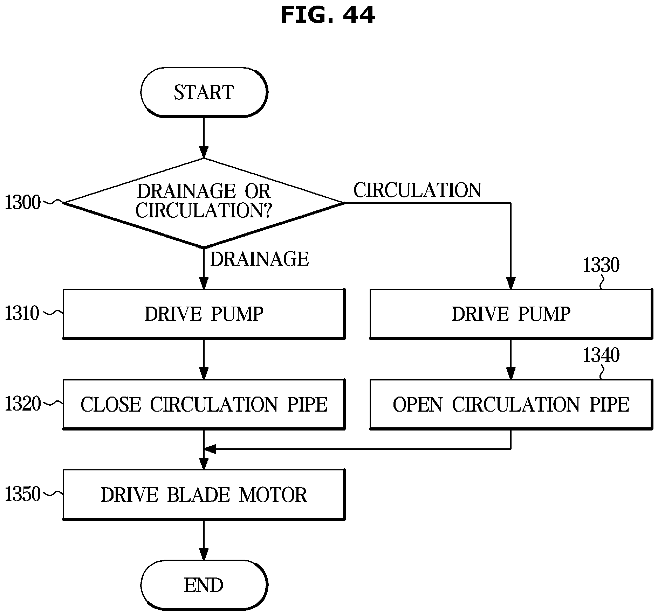

FIG. 42 shows an example of a control block diagram of a washing machine according to an embodiment and flows of signals. FIG. 43 shows an example of a control block diagram of a washing machine according to an embodiment and flows of signals. FIG. 44 is a flowchart illustrating a control method of a washing machine according to an embodiment when a driving condition of a circulation pump or a drain pump is satisfied.

Referring to FIGS. 42 and 43, the controller 330 may control various components based on a signal corresponding to a user input received from the user interface 310.

The pump device 80 may include a single pump 81 or 82.

The controller 330 may output a control signal for driving the pump 81 or 82 for a circulation operation and a drain operation. The pump 81 or 82 may operate based on a control signal from the controller 330.

The controller 330 may output a control signal for driving the motor 130 to rotate the blade 140. The motor 130 may operate based on the control signal from the controller 330.

Referring to FIG. 42, the flow path switching device 200 may include the first valve 210.

The controller 330 may output a control signal for opening or closing the first valve 210. The first valve 210 may be opened or closed based on the control signal from the controller 330.

Referring to FIG. 43, the flow path switching device 200 may include the first valve 210 and the second valve 220.

The controller 330 may output a control signal for opening or closing the first valve 210 and the second valve 220. The first valve 210 and the second valve 220 may be opened or closed based on the control signal from the controller 330.

According to various embodiments, the controller 330 may operate the pump 81 or 82 and control the first valve 210 to close the circulation pipe 71.

Also, the controller 330 may operate the pump 81 or 82, control the first valve 210 to close the circulation pipe 71, and control the second valve 220 to open the drain pipe 72.

According to various embodiments, the controller 330 may operate the pump 81 or 82 and drive the motor 130.

Referring to FIG. 44, the controller 330 may drive the pump 81 or 82 based on beginning (drainage of 1300) of a drain operation 1014 or 1023 (1310).

As described above, in the drain operation 1014 or 1023, the controller 330 may control the flow path switching device 200 to close the circulation pipe 71 based on an operation of the pump 81 or 82 (1320).

Controlling the flow path switching device 200 to close the circulation pipe 71 may include opening the drain pipe 72.

Also, the controller 330 may drive the pump 81 or 82 based on beginning (circulation of 1300) of a circulation operation (1330).

As described above, during the circulation operation, the controller 330 may control the flow path switching device 200 to open the circulation pipe 71 based on an operation of the pump 81 or 82 (1340).

Controlling the flow path switching device 200 to open the circulation pipe 71 may include closing the drain pipe 72.

The controller 330 may drive the motor 130 based on an operation of the pump 81 or 82 (1350).

For example, the controller 330 may drive the motor 130 based on an operation of the pump 81 or 82 during the drain operation 1014 or 1023.

As another example, the controller 330 may drive the motor 130 based on an operation of the pump 81 or 82 during the circulation operation.

According to the disclosure, by rapidly transferring foreign materials collected by the filter 110 during a drain operation and/or a circulation operation to one side of the inside of the filter 110, the life space of the filter 110 may be improved.

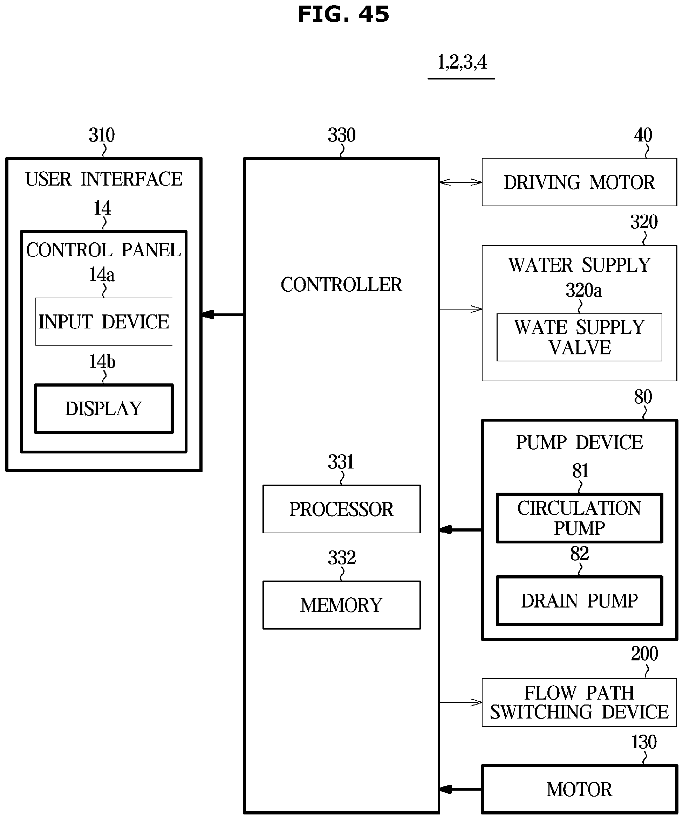

FIG. 45 shows an example of a control block diagram of a washing machine according to an embodiment and flows of signals.

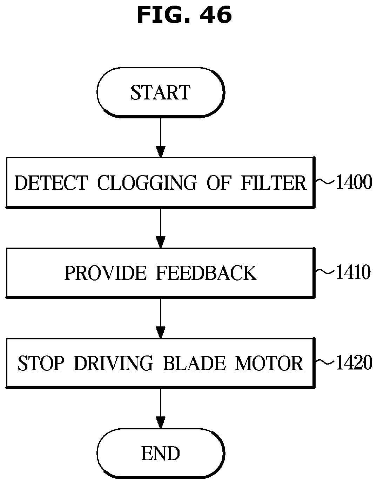

FIG. 46 is a flowchart illustrating a control method of a washing machine according to an embodiment when clogging of a filter is detected.

Referring to FIG. 45, the controller 330 may receive feedback signals from various components.

In an embodiment, the driving circuitry included in the pump device 80 may sense a value related to a load of the circulation pump 81 and/or the drain pump 82. For example, a value related to a load of the circulation pump 81 and/or the drain pump 82 may include a driving current value, a consumption power value, and/or a rotation speed value of the circulation pump 81 and/or the drain pump 82.

The controller 330 may receive a sensing signal related to a load of the pump device 80 from the pump device 80.

In an embodiment, the driving circuitry for driving the motor 130 may sense a value related to a load of the motor 130. For example, the value related to the load of the motor 130 may include a driving current value, a consumption power value, and/or a rotation speed value of the motor 130.

The controller 330 may receive a sensing signal related to a load of the motor 120 from the driving circuitry of the motor 130.

The controller 330 may detect clogging of the filter 110 based on the sensing signal received from various components.

The controller 330 may output a control signal for controlling the display 14b.

The controller 330 may control the display 14b to notify clogging of the filter 110.

Referring to FIG. 46, the controller 330 may detect clogging of the filter 110 (1400). A clogged state of the filter 110 may be a preset state in which the filter 110 is incapable of efficiently collecting foreign materials.

According to various embodiments, the controller 330 may detect a load of the circulation pump 81 while operating the circulation pump 81, and detect clogging of the filter 110 based on a load value of the circulation pump 81. For example, the controller 330 may detect clogging of the filter 110 when a load value of the circulation pump 81 exceeding a preset value is maintained for a preset time.

To this end, the washing machine 1, 2, 3, or 4 may include a current sensor (not shown) that detects driving current applied to the circulation pump 81, a power sensor (not shown) that detects power applied to the circulation pump 81, and/or a speed sensor (not shown) that detects rotation speed of the circulation pump 81.

The controller 330 may obtain, while operating the circulation pump 81, a load value of the circulation pump 81 based on sensor data obtained by the current sensor (not shown) that detects driving current applied to the circulation pump 81, the power sensor (not shown) that detects power applied to the circulation pump 81, and/or the speed sensor (not shown) that detects rotation speed of the circulation pump 81.

According to various embodiments, the controller 330 may detect, while operating the drain pump 82, a load of the drain pump 82, and detect clogging of the filter 110 based on a load value of the drain pump 82. For example, the controller 330 may detect clogging of the filter 110 when a load value of the drain pump 82 exceeding a preset value is maintained for a preset time.

To this end, the washing machine 1, 2, 3, or 4 may include a current sensor (not shown) that detects driving current applied to the drain pump 82, a power sensor (not shown) that detects power applied to the circulation pump 81, and/or the speed sensor (not shown) that detects rotation speed of the drain pump 82.

The controller 330 may obtain, while operating the drain pump 82, a load value of the drain pump 82 based on sensor data obtained by the current sensor (not shown) that detects driving current applied to the drain pump 82, the power sensor (not shown) that detects power applied to the drain pump 82, and/or the speed sensor (not show) that detects rotation speed of the drain pump 82.

According to various embodiments, the controller 330 may detect a load of the filter motor 130 while operating the motor 130, and detect clogging of the filter 110 based on a load value of the motor 130. For example, the controller 330 may detect clogging of the filter 110 when a load value of the motor 130 exceeding a preset value is maintained for a preset time.

The controller 330 may control the user interface 310 to provide a feedback notifying clogging of the filter 110, based on a detection of clogging of the filter 110 (1410).

In an embodiment, the controller 330 may control the display 14b to output a visual feedback representing clogging of the filter 110. The visual feedback representing clogging of the filter 110 may include various visual displays, such as text, figures, symbols, icons, images, and/or animations.

In an embodiment, in the case in which the user interface 310 includes a speaker, the controller 330 may control the speaker to output an auditory feedback notifying clogging of the filter 110. The auditory feedback notifying clogging of the filter 110 may include various sounds, such as a beep sound, a voice, etc.

Continuing to drive the motor 130 despite a detection of clogging of the filter 110 may cause a failure of the motor 130 and prevent foreign materials in the filter 110 from being transferred to one side.

The controller 330 may stop driving the motor 130 based on a detection of clogging of the filter 110 (1420).

According to the disclosure, by stopping driving the motor 130 according to a detection of clogging of the filter 110, a failure of the motor 130 may be prevented in advance.

So far, specific embodiments have been shown and described, however, the disclosure is not limited to these embodiments. It should be interpreted that various modifications may be made by one of ordinary skill in the technical art to which the disclosure belongs, without deviating from the gist of the technical concept of the disclosure, which is defined in the following claims.

## Claims

1. A washing machine comprising:
a housing including a loading inlet open along a front direction;
a tub to be positioned inside the housing;
a door configured to open or close the loading inlet;
a detergent supply device to be provided in a first space formed between the housing and an upper portion of a first side of the tub, the detergent supply device configured to supply a detergent to the tub;
a pump device configured to pump washing water inside the tub;
a filter configured to filter washing water received from the pump device; and
a filter discharge pipe through which washing water having passed through the filter flows, the filter discharge pipe configured to guide washing water to the tub or outside of the housing,
wherein the filter is provided in a second space formed between the housing and an upper portion of a second side of the tub.

2. The washing machine of claim 1, wherein
the housing is in a shape of a box,
the tub is in a shape of a cylinder, and
the second space is formed between an inner side of the housing and an outer side of a portion of the tub, the portion being positioned in a right side from a vertical line passing a center of the loading inlet and in an upper side from a horizontal line passing the center of the loading inlet.

3. The washing machine of claim 1, wherein
the filter is configured to be inserted into the second space or taken out of the second space.

4. The washing machine of claim 1, further comprising a case configured to accommodate the filter,
wherein the case includes:
an inlet to be connected to the pump device, wherein washing water flows toward the filter through the inlet; and
an outlet configured to discharge washing water passed through the filter to the filter discharge pipe.

5. The washing machine of claim 4, wherein the filter discharge pipe includes:
a circulation pipe extending from the outlet to the tub; and
a drain pipe extending from the outlet to the outside of the housing.

6. The washing machine of claim 5, further comprising a flow path switching device configured to enable washing water passed through the filter to flow into the circulation pipe or enable washing water passed through the filter to flow into the drain pipe.

7. The washing machine of claim 6, wherein the outlet comprises:
a first outlet port connected to the circulation pipe; and
a second outlet port connected to the drain pipe and positioned at an upper location than the first outlet port.

8. The washing machine of claim 7, wherein the flow path switching device further comprises a valve configured to open or close the circulation pipe.

9. The washing machine of claim 7, wherein the filter comprises:
a first filter port configured to discharge filtered washing water to the first outlet port; and
a second filter port configured to discharge filtered washing water to the second outlet port, and
the flow path switching device further comprises a valve configured to open or close the first filter port.

10. The washing machine of claim 8 or 9, further comprising a controller configured to control the valve,
wherein the controller is configured to close the valve during a drain operation and open the valve based on termination of the drain operation.

11. The washing machine of claim 6, wherein the flow path switching device further comprises:
a first valve configured to open or close the circulation pipe; and
a second valve configured to open or close the drain pipe,
the washing machine further comprising a controller configured to control the first valve and the second valve, the controller closes the first valve and opens the second valve during a drain operation.

12. The washing machine of claim 1, wherein the filter forms a collecting space therein, and
the collecting space collects foreign materials contained in the washing water as the washing water received from the pump device flows from inside of the filter to outside of the filter.

13. The washing machine of claim 4, wherein the filter comprises:
a first filter portion configured to filter washing water received through the inlet; and
a second filter portion positioned in front of the first filter portion and configured to be inserted into the case or taken out of the case,
the washing machine further comprising a blade configured to be rotatable to transfer foreign materials collected in the first filter portion to the second filter portion.

14. The washing machine of claim 13, further comprising:
a user interface;
a motor configured to rotate the blade; and
a controller configured to supply driving current to the motor based on an operation of at least one pump included in the pump device, detect clogging of the filter based on a load of the motor, and control the user interface to provide a feedback for notifying clogging of the filter in response to the detection of the clogging of the filter.

15. The washing machine of claim 13, further comprising:
a motor configured to rotate the blade; and
a controller configured to supply driving current to the motor based on an operation of at least one pump included in the pump device, detect clogging of the filter based on a load of the motor, and stop operating the motor in response to the detection of the clogging of the filter.
